(19) Europäisches Patentamt / European Patent Office / Office européen des brevets

(11) **EP 4 694 338 A1**

(12) **EUROPEAN PATENT APPLICATION**
published in accordance with Art. 153(4) EPC

(43) Date of publication:
**11.02.2026 Bulletin 2026/07**

(21) Application number: **24799902.2**

(22) Date of filing: **30.04.2024**

(51) International Patent Classification (IPC):
**H04W 36/00** (2009.01)

(52) Cooperative Patent Classification (CPC):
**H04W 36/00**

(86) International application number:
**PCT/CN2024/091063**

(87) International publication number:
**WO 2024/227446 (07.11.2024 Gazette 2024/45)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **04.05.2023 CN 202310492219**
**31.05.2023 CN 202310647088**

(71) Applicant: **Huawei Technologies Co., Ltd.**
**Shenzhen, Guangdong 518129 (CN)**

(72) Inventors:
• **WANG, Sihai**
**Shenzhen, Guangdong 518129 (CN)**
• **QIN, Cheng**
**Shenzhen, Guangdong 518129 (CN)**
• **YANG, Rui**
**Shenzhen, Guangdong 518129 (CN)**

(74) Representative: **Thun, Clemens**
**Mitscherlich PartmbB**
**Patent- und Rechtsanwälte**
**Karlstraße 7**
**80333 München (DE)**

(54) **CONFIGURATION HANDOVER METHOD, TERMINAL DEVICE AND NETWORK DEVICE**

(57) This application provides a handover configuration method, a terminal device, and a network device, relating to the field of wireless communication technologies. This application helps improve accuracy and a success rate of cell handover. The method includes: A first terminal device receives, in a first cell, downlink signaling from a first network device, and determines configuration information based on the downlink signaling, where the configuration information is used to configure an event related to a probability, where the probability includes a probability of cell handover or a probability that a second cell serves as a target cell, and the second cell includes at least one of the following: the first cell, at least one intra-radio access technology neighboring cell of the first cell, or at least one inter-radio access technology neighboring cell of the first cell; the configuration information indicates to determine first information based on a first submodel, where the first submodel is a part of an artificial intelligence AI/a machine learning ML model, and the first information is used for cell handover; and/or the configuration information is used to configure an event related to a future measurement quantity, where the future measurement quantity is obtained by the first terminal device through prediction.

FIG. 3

## Description

This application claims priorities to Chinese Patent Application No. 202310492219.7, filed with the China National Intellectual Property Administration on May 4, 2023 and entitled "HANDOVER CONFIGURATION METHOD AND APPARATUS", and to Chinese Patent Application No. 202310647088.5, filed with the China National Intellectual Property Administration on May 31, 2023 and entitled "HANDOVER CONFIGURATION METHOD, TERMINAL DEVICE, AND NETWORK DEVICE", both of which are incorporated herein by reference in their entireties.

## TECHNICAL FIELD

This application relates to the field of wireless communication, and in particular, to a handover configuration method, a terminal device, and a network device.

## BACKGROUND

In wireless communication systems, when quality of radio links between a terminal device and a source cell deteriorates and/or quality of radio links between the terminal device and a cell other than the source cell improves, the terminal device is handed over from the source cell to a target cell, to ensure link quality during message transmission between the terminal device and a network device.

However, in a cell handover procedure, there are problems of poor accuracy of handover to the target cell and a high probability of handover failures.

## SUMMARY

To resolve the foregoing technical problem, this application provides a handover configuration method, a terminal device, and a network device, to improve accuracy and a success rate of cell handover. To achieve the foregoing objective, the following technical solutions are used in this application.

According to a first aspect, a handover configuration method is provided. The method may be performed by a first terminal device, or may be performed by a chip of the first terminal device. An example in which the method is performed by the first terminal device is used below for description. The method includes: The first terminal device receives, in a first cell, downlink signaling from a first network device, and determines configuration information based on the downlink signaling, where the configuration information indicates at least one of the following:

a configuration 1: an event related to a probability, where the probability includes a probability of cell handover or a probability that a second cell serves as a target cell, the second cell belongs to a first cell set, and the first cell set includes at least one of the following: the first cell, at least one intra-radio access technology neighboring cell of the first cell, or at least one inter-radio access technology neighboring cell of the first cell; and

in the configuration 1, when the target cell is different from the first cell, the target cell is a cell accessed by the first terminal device after the first terminal device performs the cell handover, and the cell handover is an operation that can be performed by the first terminal device; or when the target cell overlaps the first cell, it means that the first terminal device may not perform the cell handover;

a configuration 2: determining first information based on a first submodel, where the first submodel is a part of the following model: an artificial intelligence AI model or a machine learning ML model, and the first information is used for cell handover; and

a configuration 3: an event related to a measurement quantity at a first moment or a measurement quantity in a first time period, where the first moment includes a future moment, the first time period includes a future time period, and the measurement quantity at the first moment or the measurement quantity in the first time period is obtained by the first terminal device through prediction.

In other words, the first network device configures one or more configurations, for example, the configuration 1, the configuration 2, or the configuration 3, for the first terminal device by using the configuration information, to optimize a cell handover-related configuration.

Specifically, in the configuration 1, the event of the configuration 1 is related to the probability, and is predictive and forward-looking. For example, the probability that the first cell serves as the target cell can represent a confidence level that the first cell serves as the target cell. The probability of cell handover can represent a necessity of performing the cell handover.

In the configuration 2, the first information is information obtained by performing processing using the first submodel. Because the first submodel is a part of the AI/ML model, the first information does not indicate the target cell, but is information used for the cell handover.

In the configuration 3, the event of the configuration 3 is related to the measurement quantity at the future moment or in the future time period, and is also predictive and forward-looking.

For the events defined in the configuration 1 and the configuration 3, other parameters are also referenced, such as a threshold and an offset value that correspond to the events. Similarly, in the configuration 2, after the first terminal device determines the first information based on the first submodel, the first network device determines, based on the first information, or the first information and reference information on a network side (for example, a load status of each cell), whether to perform the cell handover, or determines the target cell based on the first information, or the first information and reference information on a network side. In comparison with determining the target cell based only on a measurement quantity in a configured time period, or simply selecting a cell with a highest probability as the target cell, the optimized configuration in this application enables a communication device to predict, with reference to more information, whether to perform the cell handover or determine the target cell, to help improve accuracy and a success rate of the handover.

In a possible design, when the probability includes the probability that the second cell serves as the target cell, the configuration 1 is used to configure at least one of an event 1 to an event 5. The event 1 to the event 5 are described as follows:

Event 1: A probability that the first cell serves as the target cell is greater than a threshold, where

an entry condition: M1>Thresh; and
an exit condition: M1<Thresh, where
M1 indicates the probability that the first cell serves as the target cell; and
Thresh indicates the threshold of the event 1, and the first cell is the same as the second cell.

For example, the event 1 is used to stop inter-frequency/inter-radio access technology measurement. In other words, there is high probability that the first cell serves as the target cell, and the first terminal device may stop measurement, for example, inter-frequency/inter-radio access technology measurement, to reduce terminal power consumption.

Event 2: A probability that the first cell serves as the target cell is less than a threshold, where

an entry condition: M1<Thresh; and
an exit condition: M1>Thresh, where
M1 indicates the probability that the first cell serves as the target cell; and
Thresh indicates the threshold of the event 2, and the first cell is the same as the second cell.

For example, the event 2 is used to start inter-frequency/inter-radio access technology measurement. In other words, there is a low probability that the first cell serves as the target cell, the first terminal device may start measurement, for example, inter-frequency/inter-radio access technology measurement. When a measurement quantity of inter-frequency/inter-radio access technology measurement is used for the cell handover, the inter-frequency/inter-radio access technology measurement is started in a timely manner. This helps reduce an unnecessary delay of the cell handover.

Event 3: The probability that the second cell serves as the target cell is greater than a probability that the first cell serves as the target cell, where the first cell is the same as the second cell, where

an entry condition: M2>M1; and
an exit condition: M2<M1, where
M2 indicates the probability that the second cell serves as the target cell; and
M1 indicates the probability that the first cell serves as the target cell.

For example, in the event 3, the second cell is at least one intra-radio access technology neighboring cell, for example, an intra-frequency neighboring cell or an inter-frequency neighboring cell, of the first cell. Correspondingly, the event 3 may be used to start intra-frequency/inter-frequency handover. In other words, there is a high probability that the intra-frequency/inter-frequency neighboring cell of the first cell serves as the target cell. In this case, the first terminal device may send a probability-related and/or measurement-related report to the first network device, and the first network device performs determining, based on the report, and starts cell handover. Correspondingly, the first terminal device may perform the cell handover.

Event 4: The probability that the second cell serves as the target cell is greater than a threshold, where

an entry condition: M2>Thresh; and
an exit condition: M2<Thresh, where
M2 indicates the probability that the second cell serves as the target cell; and
Thresh indicates the threshold of the event 4.

For example, the second cell is at least one intra-radio access technology neighboring cell, for example, an intra-frequency neighboring cell or an inter-frequency neighboring cell, of the first cell. Correspondingly, the event 4 may be used to start intra-frequency/inter-frequency handover.

For another example, the second cell is at least one inter-radio access technology neighboring cell of the first cell. Correspondingly, the event 4 may be used to start inter-radio access technology handover.

Event 5: A probability that the first cell serves as the target cell is less than a first threshold, and the probability that the second cell serves as the target cell is greater than a second threshold, where the first cell is the same as the second cell, where

an entry condition: M1<Thresh51 and M2>Thresh52; and
an exit condition: M1>Thresh51 and/or M2<Thresh52, where
M1 indicates the probability that the first cell serves as the target cell;
M2 indicates the probability that the second cell serves as the target cell; and
Thresh51 indicates the first threshold of the event 5, and Thresh52 indicates the second threshold of the event 5.

For example, the second cell is at least one intra-radio access technology neighboring cell, for example, an intra-frequency neighboring cell or an inter-frequency neighboring cell, of the first cell. Correspondingly, the event 5 may be used to start intra-frequency/inter-frequency handover.

For another example, the second cell is at least one inter-radio access technology neighboring cell of the first cell. Correspondingly, the event 5 may be used to start inter-radio access technology handover.

In a possible design, when the probability includes the probability that the second cell serves as the target cell, the configuration 1 is used to configure at least one of an event 1 to an event 5. The event 1 to the event 5 are described as follows:

Event 1: A probability that the first cell serves as the target cell is greater than a threshold, where

an entry condition: $M1-Hys>Thresh$; and
an exit condition: $M1+Hys<Thresh$, where
M1 indicates the probability that the first cell serves as the target cell;
Hys indicates a hysteresis parameter of the event 1; and
Thresh indicates the threshold of the event 1, and the first cell is the same as the second cell.

In the event 1, the hysteresis parameter Hys is further referenced, so that determining of the event 1 is more stable.
Event 2: A probability that the first cell serves as the target cell is less than a threshold, where

an entry condition: $M1+Hys<Thresh$; and
an exit condition: $M1-Hys>Thresh$, where
M1 indicates the probability that the first cell serves as the target cell;
Hys indicates a hysteresis parameter of the event 2; and
Thresh indicates the threshold of the event 2, and the first cell is the same as the second cell.

In the event 2, the hysteresis parameter Hys is further referenced, so that determining of the event 2 is more stable.
Event 3: The probability that the second cell serves as the target cell is greater than a probability that the first cell serves as the target cell, where the first cell is different from the second cell.

The event 3 includes at least one of an event 31 and an event 32.

Conditions of the event 31 include:

an entry condition: $M2+Of2+Oc2-Hys>M1+Of1+Oc1+Off$; and
an exit condition: $M2+Of2+Oc2+Hys<M1+Of1+Oc1+Off$, where
M2 indicates the probability that the second cell serves as the target cell;
M1 indicates the probability that the first cell serves as the target cell;
Of2 indicates a first offset of the probability that the second cell serves as the target cell;
Oc2 indicates a second offset of the probability that the second cell serves as the target cell;
Of1 indicates a first offset of the probability that the first cell serves as the target cell;
Oc1 indicates a second offset of the probability that the first cell serves as the target cell;
Hys indicates a hysteresis parameter of the event 31; and
Off indicates an offset value of the event 31.

In the event 31, more parameters, such as Of2, Oc2, Of1, Oc1, Hys, and Off, are referenced, so that determining of the event 31 is more accurate, more flexible, and more stable.

Conditions of the event 32 include:

an entry condition: $M2+Oc2-Hys>M1+Oc1+Off$, and
an exit condition: $M2+Oc2+Hys<M1+Oc1+Off$, where
M2 indicates the probability that the second cell serves as the target cell;
M1 indicates the probability that the first cell serves as the target cell;
Oc2 indicates an offset of the probability that the second cell serves as the target cell;
Oc1 indicates an offset of the probability that the first cell serves as the target cell;
Hys indicates a hysteresis parameter of the event 32; and
Off indicates an offset value of the event 32.

In the event 32, more parameters, such as Oc2, Oc1, Hys, and Off, are referenced, making the determining of the event 32 more accurate, flexible, and stable.

Event 4: The probability that the second cell serves as the target cell is greater than a threshold, where

an entry condition: $M2+Of2+Oc2-Hys>Thresh$; and
an exit condition: $M2+Of2+Oc2+Hys<Thresh$, where
M2 indicates the probability that the second cell serves as the target cell;
Of2 indicates a first offset of the probability that the second cell serves as the target cell;
Oc2 indicates a second offset of the probability that the second cell serves as the target cell;
Hys indicates a hysteresis parameter of the event 4;

and

Thresh indicates the threshold of the event 4.

In the event 4, more parameters, such as Of2, Oc2, and Hys, are referenced, so that determining of the event 4 is more accurate, flexible, and stable.

Event 5: A probability that the first cell serves as the target cell is less than a first threshold, and the probability that the second cell serves as the target cell is greater than a second threshold, where the first cell is different from the second cell, where

an entry condition: $M1+Hys51<Thresh51$ and $M2+Of2+Oc2-Hys52>Thresh52$; and

an exit condition: $M1-Hys51>Thresh51$ and/or $M2+Of2+Oc2+Hys52<Thresh52$, where

M1 indicates the probability that the first cell serves as the target cell;

M2 indicates the probability that the second cell serves as the target cell;

Of2 indicates a first offset of the probability that the second cell serves as the target cell;

Oc2 indicates a second offset of the probability that the second cell serves as the target cell;

Hys51 indicates a first hysteresis parameter of the event 5;

Hys52 indicates a second hysteresis parameter of the event 5;

Thresh51 indicates the first threshold of the event 5; and

Thresh52 indicates the second threshold of the event 5.

In the event 5, more parameters, such as Of2, Oc2, Hys51, and Hys52, are referenced, so that determining of the event 5 is more accurate, more flexible, and more stable.

In a possible design, when the probability includes the probability that the second cell serves as the target cell, and the second cell is a cell that is in the first cell set and that has a highest probability of being the target cell, the configuration 1 is used to configure at least one of an event 6 and an event 7. The event 6 and the event 7 are described as follows:

Event 6: The probability that the second cell serves as the target cell is greater than an offset value of a probability that a third cell in the first cell set serves as the target cell, where

an entry condition: $M2>Mx+Off$; and

an exit condition: $M2<Mx+Off$, where

M2 indicates the probability that the second cell serves as the target cell;

Mx indicates the probability that the third cell serves as the target cell, and the third cell is any cell in the first cell set other than the second cell; and

Off indicates the offset value of the event 6.

For example, the second cell may be the first cell. Correspondingly, the event 6 may be used to determine that cell handover is not required temporarily. In other words, there is a high probability that the first cell serves as the target cell, and the first terminal device does not need to perform the cell handover.

For another example, the second cell is a cell in the first cell set other than the first cell. Correspondingly, the event 6 may be used to start handover. In other words, there is a high probability that at least one cell other than the first cell serves as the target cell. In this case, the first terminal device may send a probability-related and/or measurement-related report to the first network device, and the first network device performs determining, based on the report, and starts cell handover. This helps reduce a cell handover delay.

Event 7: The probability that the second cell serves as the target cell is less than an offset value of a probability that a third cell in the first cell set serves as the target cell, where

an entry condition: $M2<Mx+Off$; and

an exit condition: $M2>Mx+Off$, where

M2 indicates the probability that the second cell serves as the target cell;

Mx indicates the probability that the third cell serves as the target cell, and the third cell is any cell in the first cell set other than the second cell; and

Off indicates the offset value of the event 7.

In other words, in terms of probability, there is no cell that has a high probability of being the target cell, and it is difficult to determine whether to perform cell handover or determine the target cell. Therefore, for example, the first terminal device may suspend performing target cell probability inference, to reduce terminal power consumption.

In a possible design, when the probability includes the probability that the second cell serves as the target cell, and the second cell is a cell that is in the first cell set and that has a highest probability of being the target cell, the configuration 1 is used to configure at least one of an event 6 and an event 7. The event 6 and the event 7 are described as follows:

Event 6: The probability that the second cell serves as the target cell is greater than an offset value of a probability that a third cell in the first cell set serves as the target cell, where

an entry condition: $M2+Of2+Oc2-Hys>Mx+Ofx+Ocx+Off$; and

an exit condition: $M2+Of2+Oc2+Hys<Mx+Ofx+Ocx+Off$, where

M2 indicates the probability that the second cell serves as the target cell;

Mx indicates the probability that the third cell serves as the target cell, and the third cell is any cell in the first cell set other than the second cell;

Of2 indicates a first offset of the probability that the second cell serves as the target cell;

Oc2 indicates a second offset of the probability that the second cell serves as the target cell;

Ofx indicates a first offset of the probability that the third cell serves as the target cell;

Ocx indicates a second offset of the probability that the third cell serves as the target cell;

Hys indicates a hysteresis parameter of the event 6; and

Off indicates the offset value of the event 6.

In the event 6, more parameters, such as Of2, Oc2, Ofx, Ocx, and Hys, are referenced, so that determining of the event 6 is more accurate, flexible, and stable.

Event 7: The probability that the second cell serves as the target cell is less than an offset value of a probability that a third cell in the first cell set serves as the target cell, where

an entry condition: M2+Of2+Oc2+Hys<Mx+Ofx+Ocx+Off; and

an exit condition: M2+Of2+Oc2-Hys>Mx+Ofx+Ocx+Off, where

M2 indicates the probability that the second cell serves as the target cell;

Mx indicates the probability that the third cell serves as the target cell, and the third cell is any cell in the first cell set other than the second cell;

Of2 indicates a first offset of the probability that the second cell serves as the target cell;

Oc2 indicates a second offset of the probability that the second cell serves as the target cell;

Ofx indicates a first offset of the probability that the third cell serves as the target cell;

Ocx indicates a second offset of the probability that the third cell serves as the target cell;

Hys indicates a hysteresis parameter of the event 7; and

Off indicates the offset value of the event 7.

In the event 7, more parameters, such as Of2, Oc2, Ofx, Ocx, and Hys, are referenced, so that determining of the event 7 is more accurate, flexible, and stable.

In a possible design, when the probability includes the probability that the second cell serves as the target cell, the configuration 1 is used to configure at least one of an event 8 and an event 9. The event 8 and the event 9 are described as follows:

Event 8: A sum of probabilities of $k$ cells with higher probabilities of being the target cell is greater than a threshold, where

an entry condition: $\sum_{i=1}^{k} M_i > \text{Thresh}$ ; and

an exit condition: $\sum_{i=1}^{k} M_i < \text{Thresh}$ , where

$M_i$ indicates a probability that an $i$th cell in the $k$ cells serves as the target cell, the $k$ cells are first $k$ cells in the first cell set with higher probabilities of being the target cell, and the first cell set includes N cells, where $k \le N$, and $k$ and $N$ are positive integers; and Thresh indicates the threshold of the event 8.

For example, the event 8 may be used to start another AI/ML model, to comprehensively determine the target cell.

Specifically, the first terminal device starts an AI/ML model 1, roughly estimates, by using the AI/ML model 1, a probability that each of the N cells serves as the target cell, and then uses the first $k$ cells that have higher probabilities in the N cells for determining the event 8.

If the entry condition of the event 8 is satisfied, the AI/ML model 2 is started, a probability that each of the foregoing $k$ cells serves as the target cell is accurately estimated by using the AI/ML model 2, and then the target cell is determined based on the accurately estimated probabilities. During accurate estimation, the AI/ML model 2 is started only when the event 8 is satisfied, and accurate estimation is performed only for the $k$ cells, instead of performing accurate estimation on the N cells. This helps reduce running energy consumption on a terminal device side, and can further ensure accuracy of the target cell.

Event 9: A sum of probabilities of $k$ cells with higher probabilities of being the target cell is less than a threshold, where

an entry condition: $\sum_{i=1}^{k} M_i < \text{Thresh}$ ; and

an exit condition: $\sum_{i=1}^{k} M_i > \text{Thresh}$ , where

$M_i$ indicates a probability that an $i$th cell in the $k$ cells serves as the target cell, the $k$ cells are first $k$ cells in the first cell set with higher probabilities of being the target cell, and the first cell set includes N cells, where $k \le N$, and $k$ and $N$ are positive integers; and Thresh indicates the threshold of the event 9.

For example, the event 9 may be used to temporarily stop AI/ML model inference.

Specifically, the first terminal device starts an AI/ML model 1, roughly estimates, by using the AI/ML model 1, a probability that each of the N cells serves as the target cell, and then uses the first $k$ cells that have higher probabilities in the N cells for determining the event 9. If the entry condition of the event 9 is satisfied, inference using the AI/ML model 1 is temporarily stopped, to help reduce running energy consumption on a terminal device side.

In a possible design, when the probability includes the probability that the second cell serves as the target cell, the configuration 1 is used to configure at least one of an event 8 and an event 9. The event 8 and the event 9 are described as follows:

Event 8: A sum of probabilities of $k$ cells with higher probabilities of being the target cell is greater than a threshold, where

an entry condition:

$$\sum_{i=1}^{k} M_i - Hys > \text{Thresh}$$ ; and

an exit condition: $\sum_{i=1}^{k} M_i + Hys < \text{Thresh}$, where

$M_i$ indicates a probability that an $i^{\text{th}}$ cell in the $k$ cells serves as the target cell, the $k$ cells are first $k$ cells in the first cell set with higher probabilities of being the target cell, and the first cell set includes N cells, where $k \le N$, and $k$ and $N$ are positive integers;

Hys indicates a hysteresis parameter of the event 8; and

Thresh indicates the threshold of the event 8.

In the event 8, the hysteresis parameter Hys is further referenced, so that determining of the event 8 is more stable.

Event 9: A sum of probabilities of $k$ cells with higher probabilities of being the target cell is less than a threshold, where

an entry condition:

$$\sum_{i=1}^{k} M_i + Hys < \text{Thresh}$$ ; and

an exit condition: $\sum_{i=1}^{k} M_i - Hys > \text{Thresh}$, where

$M_i$ indicates a probability that an $i^{\text{th}}$ cell in the $k$ cells serves as the target cell, the $k$ cells are first $k$ cells in the first cell set with higher probabilities of being the target cell, and the first cell set includes N cells, where $k \le N$, and $k$ and $N$ are positive integers;

Hys indicates a hysteresis parameter of the event 9; and

Thresh indicates the threshold of the event 9.

In the event 9, the hysteresis parameter Hys is further referenced, so that determining of the event 9 is more stable.

In a possible design, when the probability includes the probability of cell handover, the configuration 1 is used to configure at least one of an event 10 and an event 11. The event 10 and the event 11 are described as follows:

Event 10: The probability of cell handover is greater than a threshold, where

an entry condition: $P$>Thresh; and
an exit condition: $P$<Thresh, where
$P$ indicates the probability of cell handover, and Thresh indicates the threshold corresponding to the event 10.

For example, the event 10 may be used to start handover. In other words, there is a high necessity for performing the cell handover, and the first terminal device may perform the cell handover.

For another example, the event 10 may further be used to start another event or an AI/ML model, to accurately determine the target cell. Specifically, an AI/ML model of the event 10 may be simple, and an AI/ML model for accurately determining the target cell may be complex and have high power consumption. The AI/ML model for accurately determining the target cell is started only when the event 10 is satisfied, so that terminal power consumption can be reduced.

Event 11: The probability of cell handover is less than a threshold, where

an entry condition: $P$<Thresh; and
an exit condition: $P$>Thresh, where
$P$ indicates the probability of cell handover, and
Thresh indicates the threshold corresponding to the event 11.

For example, the event 11 may be used to temporarily stop AI/ML model inference. Specifically, the first terminal device starts an AI/ML model 1, estimates a probability $P$ of cell handover by using the AI/ML model 1, and then uses the probability $P$ of cell handover for determining the event 11. If the entry condition of the event 11 is satisfied, inference using the AI/ML model 1 is temporarily stopped, to help reduce running energy consumption on a terminal device side.

In a possible design, when the probability includes the probability of cell handover, the configuration 1 is used to configure at least one of an event 10 and an event 11. The event 10 and the event 11 are described as follows:

Event 10: The probability of cell handover is greater than a threshold, where

an entry condition: $P - Hys$>Thresh; and
an exit condition: $P + Hys$<Thresh, where
$P$ indicates the probability of cell handover, and
Thresh indicates the threshold corresponding to the event 10; and
Hys indicates a hysteresis parameter of the event 10.

In the event 10, the hysteresis parameter Hys is further referenced, so that determining of the event 10 is more stable.

Event 11: The probability of cell handover is less than a threshold, where

an entry condition: $P + Hys$<Thresh; and
an exit condition: $P - Hys$>Thresh, where
$P$ indicates the probability of cell handover, and Thresh indicates the threshold corresponding to the event 11; and

Hys indicates a hysteresis parameter of the event 11.

In the event 11, the hysteresis parameter Hys is further referenced, so that determining of the event 11 is more stable.

In a possible design, after determining the configuration information, the method further includes: The first terminal device sends second information to the first network device, where the second information includes an identifier of at least one cell, and/or an event identifier that triggers the second information, where the at least one cell is one or more of cells that satisfy the configuration 1, and the event identifier is one or more of events in the configuration 1.

In other words, the first terminal device provides the second information to the first network device, so that the first network device determines the target cell based on the second information. The target cell is determined based on the identifier of the at least one cell and/or the event identifier that triggers the second information, prediction of the target cell is more accurate, and this helps improve accuracy and a success rate of the cell handover.

In a possible design, the second information further includes probability information, and the probability information includes a probability that the cell indicated by the second information serves as the target cell, so that the first network device determines the target cell based on the probability information. In this way, prediction of the target cell is more accurate, and this helps improve accuracy and a success rate of the cell handover.

In a possible design, when the configuration information is used to configure the configuration 2, the method further includes: The first terminal device sends the first information to the first network device, where the first information is used to determine the cell handover, and/or the first information is used to determine the target cell.

The first information is information provided by the first terminal device to the first network device. Therefore, the determining of the cell handover and the determining of the target cell are performed by the first network device, so that the first network device may perform determining with reference to more information. For example, in addition to the first information, the first network device may further perform determining with reference to network side information (for example, a load status of each cell), to help improve accuracy and a success rate of the cell handover.

In a possible design, the first information is related to at least one of the following:

a first item: a measurement quantity obtained by the first terminal device through measurement;
a second item: channel state information CSI determined by the first terminal device; and
a third item: one or more of position information, motion information, and service information of the first terminal device.

In a possible design, when the configuration information is used to configure the configuration 3, the configuration information is further used to configure a second time period, where a measurement quantity in the second time period is used to predict a measurement quantity of the configuration 3, and the measurement quantity in the second time period is obtained by the first terminal device through measurement.

For example, when the configuration 3 is used to configure an event related to the measurement quantity at the first moment, the measurement quantity of the configuration 3 includes the measurement quantity at the first moment;

For another example, the configuration 3 is used to configure an event related to the measurement quantity in the first time period, the measurement quantity of the configuration 3 includes the measurement quantity in the first time period.

In other words, the first network device can further configure the second time period, so that the first terminal device determines the measurement quantity at the first moment or the measurement quantity in the first time period based on the measurement quantity in the second time period.

In a possible design, after determining the configuration information, the method further includes: The first terminal device sends third information to the first network device, where the third information includes an identifier of at least one cell, and/or a measurement identifier that triggers the third information; the at least one cell is one or more of cells that satisfy the configuration 3; and the measurement identifier identifies at least one measurement object and/or at least one event, and a measurement result of each of the at least one measurement object is one measurement quantity of the configuration 3. In this case, the measurement identifier may include a measurement object identifier, and the measurement object identifier identifies the measurement object.

Each of the at least one event is one event configured by using the configuration 3.

In other words, the first terminal device provides the third information to the first network device, so that the first network device determines the target cell based on the third information. The target cell is determined based on the identifier of the at least one cell and/or the measurement identifier that triggers the third information, prediction of the target cell is more accurate, and this helps improve accuracy and a success rate of the cell handover.

In a possible design, when the third information includes the identifier of the at least one cell, the third information further includes a measurement quantity, of the cell indicated by the third information, at the first moment or in the first time period, so that the first network device determines the target cell based on the measurement quantity in the third information. In this way, prediction of the target cell is more accurate, and this helps improve accuracy and a success rate of the cell handover.

In a possible design, a measurement object corresponding to the measurement quantity includes at least one of the following: a reference signal received power RSRP, reference signal received quality RSRQ, or a signal to interference plus noise ratio SINR.

In a possible design, when the configuration information is used to configure the configuration 1 and/or the configuration 3, the configuration information is further used to configure at least one of the following:

a first item: trigger duration, where the trigger duration indicates a period of time in which an event entry condition is continuously satisfied; and
a second item: trigger count, where the trigger count indicates a number of times that an event entry condition is continuously satisfied, where
the event entry condition includes an entry condition of an event configured by using the configuration information.

In this way, the first terminal device determines, only when the trigger duration and/or the quantity of trigger times are/is satisfied, to enter the event configured by using the configuration information, to help improve event determining accuracy.

In a possible design, when the configuration information is used to configure the configuration 1 and/or the configuration 3, the configuration information includes an event sequence number or an event identifier, where the event sequence number indicates an event configured by using the configuration information, and the event identifier identifies an event configured by using the configuration information.

In other words, the configuration information is used to configure the event by using the event sequence number and/or the event identifier, to help reduce signaling overheads.

According to a second aspect, a handover configuration method is provided. The method may be performed by a first network device, or may be performed by a chip of the first network device. The following uses an example in which the method is performed by the first network device for description. The method includes: The first network device determines configuration information, and sends, in a first cell, downlink signaling to a first terminal device, where the downlink signaling includes the configuration information, and the configuration information indicates at least one of the following:

a configuration 1: an event related to a probability, where the probability includes a probability of cell handover or a probability that a second cell serves as a target cell, the second cell belongs to a first cell set, and the first cell set includes at least one of the following: the first cell, at least one intra-radio access technology neighboring cell of the first cell, or at least one inter-radio access technology neighboring cell of the first cell;
a configuration 2: determining first information based on a first submodel, where the first submodel is a part of the following model: an artificial intelligence AI model or a machine learning ML model, and the first information is used for cell handover; and
a configuration 3: an event related to a measurement quantity at a first moment or a measurement quantity in a first time period, where the first moment includes a future moment, the first time period includes a future time period, and the measurement quantity at the first moment or the measurement quantity in the first time period is obtained by the first terminal device through prediction.

In a possible design, after determining the configuration information, the method further includes: The first network device receives second information from the first terminal device, where the second information includes an identifier of at least one cell, and/or an event identifier that triggers the second information, where the at least one cell is one or more of cells that satisfy the configuration 1, and the event identifier is one or more of events in the configuration 1.

In a possible design, when the configuration information is used to configure the configuration 2, the method further includes: The first network device receives the first information from the first terminal device, where the first information is used to determine the cell handover, or the first information and reference information are used to determine the cell handover; and the reference information includes information provided by at least one network device, and the at least one network device includes the first network device and/or a network device corresponding to the second cell.

In a possible design, when the configuration information is used to configure the configuration 2, the method further includes: The first network device receives the first information from the first terminal device, where the first information is used to determine the target cell accessed by the first terminal device after the first terminal device performs the cell handover, or the first information and reference information are used to determine the target cell accessed by the first terminal device after the first terminal device performs the cell handover; and the reference information includes information provided by at least one network device, and the at least one network device includes the first network device and/or a network device corresponding to the second cell.

In a possible design, after determining the configuration information, the method further includes: The first network device receives third information from the first terminal device, where the third information includes an identifier of at least one cell, and/or a measurement identifier that triggers the third information, where the at least one cell is one or more of cells that satisfy the configuration 3, where the measurement identifier identifies at least one measurement object and/or at least one event, a measurement result of each of the at least one measurement object is one measurement quantity of the configuration 3, and each of the at least one event is one event configured by using the configuration 3.

According to a third aspect, a terminal device is provided. The terminal device includes a processor and a memory, where the processor is coupled to the memory, and the memory stores program instructions; and when the program instructions stored in the memory are executed by the processor, the terminal device is enabled to perform the method according to any one of the first aspect or the possible designs of the first aspect.

According to a fourth aspect, a network device is provided. The network device includes a processor and a memory, where the processor is coupled to the memory, and the memory stores program instructions; and when the program instructions stored in the memory are executed by the processor, the network device is caused to perform the method according to any one of the second aspect or the possible designs of the second aspect.

According to a fifth aspect, a chip is provided. The chip includes a processor and a memory coupled to the processor, where the memory stores a computer program, and the chip is located in a terminal device; and when the processor executes the computer program, the terminal device is caused to perform the method according to any one of the first aspect or the possible designs of the first aspect.

According to a sixth aspect, a chip is provided. The chip includes a processor and a memory coupled to the processor, where the memory stores a computer program, and the chip is located in a network device; and when the processor executes the computer program, the network device is caused to perform the method according to any one of the second aspect or the possible designs of the second aspect.

According to a seventh aspect, a computer-readable storage medium is provided. The computer-readable storage medium stores a computer program or instructions; and when the computer program or the instructions are executed on a terminal device, the terminal device is caused to perform the method according to any one of the first aspect or the possible designs of the first aspect.

According to an eighth aspect, a computer-readable storage medium is provided. The computer-readable storage medium stores a computer program or instructions; and when the computer program or the instructions are executed on a network device, the network device is caused to perform the method according to any one of the second aspect or the possible designs of the second aspect.

According to a ninth aspect, a computer program product including instructions is provided. When the computer program product runs on a computer, the computer is caused to perform the method according to any one of the foregoing aspects.

According to a tenth aspect, a circuit system is provided. The circuit system includes a processing circuit, and the processing circuit is configured to perform the method according to any one of the foregoing aspects.

According to an eleventh aspect, a communication system is provided. The communication system includes a terminal device and a network device. The terminal device is configured to perform the method according to any one of the first aspect and the possible designs of the first aspect, and the network device is configured to perform the method according to any one of the second aspect and the possible designs of the second aspect.

For technical effects brought by any design in the second aspect to the eleventh aspect, refer to the beneficial effects in the corresponding method provided above. Details are not described herein again.

## BRIEF DESCRIPTION OF DRAWINGS

FIG. 1 is a diagram of an architecture of a communication system according to an embodiment of this application;
FIG. 2 is a schematic flowchart of a measurement configuration according to an embodiment of this application;
FIG. 3 is a schematic flowchart of a handover configuration method according to an embodiment of this application;
FIG. 4 is a schematic flowchart of another handover configuration method according to an embodiment of this application;
FIG. 5 is a schematic flowchart of still another handover configuration method according to an embodiment of this application;
FIG. 6 is a schematic flowchart of still another handover configuration method according to an embodiment of this application; and
FIG. 7 is a diagram of a structure of a communication apparatus according to an embodiment of this application.

## DESCRIPTION OF EMBODIMENTS

The following describes the technical solutions in this application with reference to the accompanying drawings.

The technical solutions in embodiments of this application may be applied to various communication systems, for example, a universal mobile telecommunications system (universal mobile telecommunications system, UMTS), a wireless local area network (wireless local area network, WLAN), a wireless fidelity (wireless fidelity, Wi-Fi) system, a wired network, a vehicle to everything (vehicle to everything, V2X) communication system, a device-to-device (device-to-device, D2D) communication system, an internet of vehicles communication system, a 4th generation (4th generation, 4G) mobile communication system, for example, a long term evolution (long term evolution, LTE) system or a worldwide interoperability for microwave access (worldwide interoperability for microwave access, WiMAX) communication system, a 5th generation (5th generation, 5G) mobile communication system, for example, a new radio (new radio, NR) system, a 6th generation (6th generation, 6G) mobile communication system, and a communication system in an indoor commercial scenario. This is not specifically limited in embodiments of this application. Indoor commercial scenarios include scenarios such as screen projection from a terminal device (for example, a mobile phone) to a screen and a virtual reality (virtual reality, VR) game. In addition, the terms "system" and "network" may be interchanged.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are used to represent giving an example, an illustration, or a description. Any embodiment or design solution described as an "example" in this application should not be explained as being more preferred or having more advantages than another embodiment or design solution. Exactly, the term "example" is for presenting a concept in a specific manner.

In embodiments of this application, "of (of)", "corresponding, relevant (corresponding, relevant)", and "corresponding (corresponding)" may be interchangeably used sometimes. It should be noted that meanings expressed by the terms are consistent when differences are not emphasized.

A network architecture and a service scenario that are described in embodiments of this application are intended to describe the technical solutions in embodiments of this application more clearly, and do not constitute any limitation on the technical solutions provided in embodiments of this application. A person of ordinary skill in the art may know that, with evolution of the network architecture and emergence of a new service scenario, the technical solutions provided in embodiments of this application are also applicable to a similar technical problem.

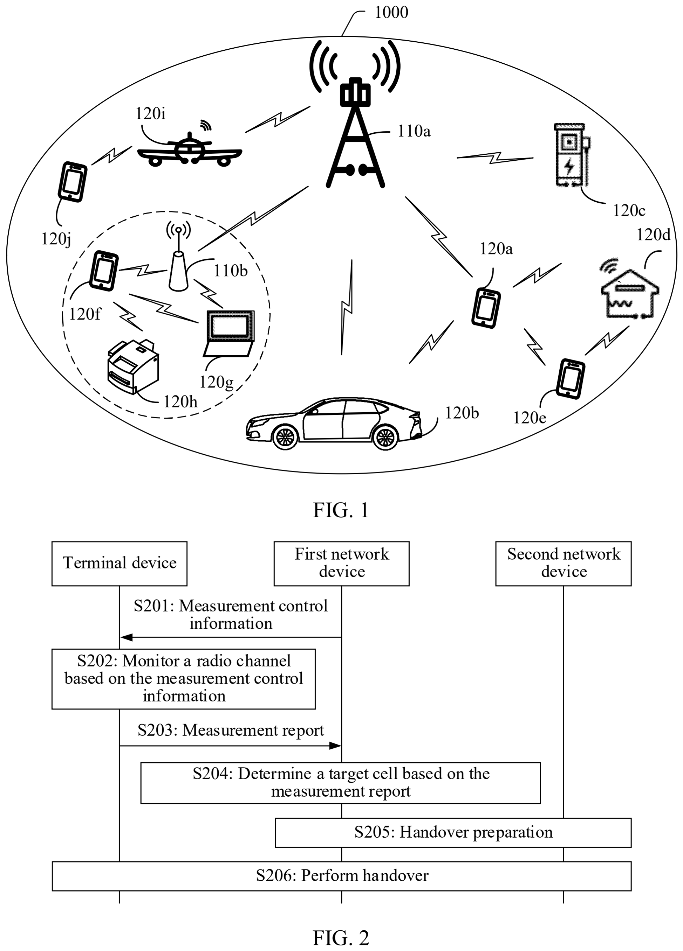

FIG. 1 is a diagram of an architecture of a communication system 1000 to which embodiments of this application are applied. As shown in FIG. 1, the communication system 1000 includes at least one network device (for example, 110a and 110b in FIG. 1) and at least one terminal device (for example, 120a to 120j in FIG. 1). The terminal device may communicate with the network device in a wireless manner. Optionally, different network devices may communicate with each other. Optionally, different terminal devices may communicate with each other.

It should be noted that FIG. 1 is merely a diagram. Although not shown, another network device may further be included in the communication system 1000. For example, the communication system 1000 may further include one or more of a core network (core network, CN) device, a wireless relay device, and a wireless backhaul device. This is not specifically limited herein. The network device may be connected to the core network device in a wireless or wired manner. The core network device and the network device may be different independent physical devices, a function of the core network device and a logical function of the network device may be integrated into a same physical device, or a part of functions of the core network device and a part of functions of the network device may be integrated into one physical device. This is not specifically limited in embodiments of this application.

Optionally, the network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a wireless fidelity (wireless fidelity, Wi-Fi) system, or the like; or may be a module or a unit that completes a part of functions of the base station. For example, the network device may be a central unit (central unit, CU), or may be a distributed unit (distributed unit, DU). The CU herein completes functions of a radio resource control (radio resource control, RRC) protocol and a packet data convergence protocol (packet data convergence protocol, PDCP) of the base station, and may further complete a function of a service data adaptation protocol (service data adaptation protocol, SDAP). The DU completes functions of a radio link control (radio link control, RLC) layer and a medium access control (medium access control, MAC) layer of the base station, and may further complete a part or all of functions of a physical (physical, PHY) layer. For specific descriptions of the foregoing protocol layers, refer to related technical specifications of a 3rd generation partnership project (3rd generation partnership project, 3GPP). The network device may be a macro base station (for example, 110a in FIG. 1), may be a micro base station or an indoor base station (for example, 110b in FIG. 1), or may be a relay node, a donor node, or the like. A specific technology and a specific device form that are used by the network device are not limited in embodiments of this application. For ease of description, the following uses the network device as an example for description.

Optionally, the terminal device accesses a core network through the network device. The terminal device includes a device that provides a voice and/or data connectivity for a user. Specifically, the terminal device includes a device that provides a voice for a user, includes a device that provides data connectivity for a user, or includes a device that provides a voice and data connectivity for a user. For example, the terminal device may include a handheld device having a wireless connection function, or a processing device connected to a wireless modem. The terminal device may communicate with the core network over a radio access network, and exchange a voice or data with the RAN, or exchange a voice and data with the RAN. The terminal device may include a user equipment (user equipment, UE), a wireless terminal device, a mobile terminal device, a D2D terminal device, a V2X terminal device, a machine-to-machine/-machine type communication (machine-to-machine/machine type communication, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (or referred to as a "cellular" phone), a computer with a mobile terminal device, or a portable, pocket-sized, handheld, or computer built-in mobile apparatus. For example, the terminal device is a device, such as a personal communication service (personal communication service, PCS) phone, a cordless telephone, a session initiation protocol (session initiation protocol, SIP) phone, a wireless local loop (wireless local loop, WLL) station, or a personal digital assistant (personal digital assistant, PDA). The terminal device further includes a limited device, for example, a device with low power consumption, a device with a limited storage capability, or a device with a limited computing capability. For example, the terminal device includes an information sensing device, for example, a barcode, radio frequency identification (radio frequency identification, RFID), a sensor, a global positioning system (global positioning system, GPS), or a laser scanner.

If the various terminal devices described above are located in a vehicle (for example, placed in the vehicle or mounted in the vehicle), the terminal devices may be all considered as vehicle-mounted terminal devices. For example, the vehicle-mounted terminal devices are also referred to as on-board units (on-board units, OBUs).

In embodiments of this application, the terminal device may further include a relay (relay). Alternatively, it is understood that any device that can perform data communication with a base station may be considered as a terminal device.

In embodiments of this application, an apparatus configured to implement a function of the terminal device may be a terminal device, or may be an apparatus, for example, a chip system, that can support a terminal device in implementing the function. The apparatus may be mounted in the terminal device. In embodiments of this application, the chip system may include a chip, or may include a chip and another discrete device. In the technical solutions provided in embodiments of this application, an example in which the apparatus configured to implement the function of the terminal is the terminal device is used for description.

It should be understood that the network device and the terminal device may be at fixed positions, or may be movable. The network device and the terminal device may be deployed on land, where the deployment includes indoor or outdoor, or handheld or vehicle-mounted deployment; may be deployed on water; or may be deployed on an aerocraft, a balloon, and a satellite in air. Application scenarios of the network device and the terminal device are not limited in embodiments of this application.

Roles of the network device and the terminal device may be relative. For example, the helicopter or an uncrewed aerial vehicle 120i in FIG. 1 may be configured as a mobile base station. For the terminal device 120j that accesses the radio access network through 120i, the terminal device 120i is a network device. However, for the network device 110a, 120i is a terminal device. In other words, 110a and 120i communicate with each other by using a wireless air interface protocol. Certainly, 110a and 120i may alternatively communicate with each other by using an interface protocol between base stations. In this case, for 110a, 120i is also a network device. Therefore, the network device and the terminal device may be collectively referred to as communication apparatuses. 110a and 110b in FIG. 1 each may be referred to as a communication apparatus with a function of a network device, and 120a to 120j in FIG. 1 each may be referred to as a communication apparatus with a function of a terminal device.

Communication may be performed between the network device and the terminal device, between network devices, and between terminal devices over a licensed spectrum, may be performed over an unlicensed spectrum, or may be performed over both a licensed spectrum and an unlicensed spectrum. Communication may be performed over a spectrum below 6 gigahertz (gigahertz, GHz), may be performed over a spectrum above 6 GHz, or may be performed over both a spectrum below 6 GHz and a spectrum above 6 GHz. A spectrum resource used for wireless communication is not limited in embodiments of this application.

In embodiments of this application, the function of the network device may alternatively be performed by a module (for example, a chip) in the network device, or may be performed by a control subsystem including the function of the network device. The control subsystem including the function of the network device may be a control center in application scenarios such as a smart grid, industrial control, smart transportation, and a smart city. The function of the terminal device may alternatively be performed by a module (for example, a chip or a modem) in the terminal device, or may be performed by an apparatus including the function of the terminal device.

In embodiments of this application, the network device sends a downlink signal or downlink information to the terminal device, where the downlink information is carried on a downlink channel. The terminal device sends an uplink signal or uplink information to the network device, where the uplink information is carried on an uplink channel. To communicate with the network device, the terminal device needs to establish a wireless connection to a cell controlled by the network device. The cell that establishes the wireless connection to the terminal device is referred to as a serving cell of the terminal device. When communicating with the serving cell, the terminal device is further affected by interference of a signal from a neighboring cell.

It should be noted that the solutions in embodiments of this application may also be applied to another communication system, and a corresponding name may alternatively be replaced with a name of a corresponding function in the another communication system.

For ease of understanding embodiments of this application, the following first briefly describes terms in embodiments of this application. It should be understood that the descriptions are merely intended to facilitate understanding of embodiments of this application, and shall not constitute any limitation on this application.

1. Handover:

In a wireless communication system, when a terminal device moves from one cell to another cell, or due to a network reason, service load adjustment, a device fault, or the like, the terminal device may be handed over from a source cell to a target cell, to ensure continuity of communication between the terminal device and a network. The foregoing procedure is referred to as "handover".

A cell accessed before handover of the terminal device due to movement, a network reason, service load adjustment, a device fault, or the like is described as a source cell.

A cell accessed after handover of the terminal device due to movement, a network reason, service load adjustment, a device fault, or the like is described as a target cell.

The source cell and the target cell may be located on different physical devices, or may be located on a same physical device.

Usually, a handover processing manner includes regular handover (handover, HO), conditional handover (conditional handover, CHO), and dual active protocol stack handover (dual active protocol stack handover, DAPS HO).

In a possible design, FIG. 2 shows a handover processing manner. The processing manner shown in FIG. 2 includes the following operations.

S201: A first network device sends measurement control information to a terminal device. Correspondingly, the terminal device receives the measurement control information from the first network device.

The first network device is a network device corresponding to a serving cell. For example, the first network device performs measurement configuration in an RRC procedure. For example, the first network device sends RRC signaling to the terminal device, where the RRC signaling includes the measurement control information.

The measurement control information includes information such as a measurement object (measurement object), a measurement report (measurement report, MR) configuration, and a measurement event.

The measurement object defines a target to be measured, including an identifier and a specific configuration of the measurement object, for example, a frequency position and a time domain position of the measurement object. The measurement object may include one or more of the following: a reference signal received power (reference signal received power, RSRP), reference signal received quality (reference signal received quality, RSRQ), or a signal to interference plus noise ratio (signal to interference plus noise ratio, SINR). A measurement/prediction result of the measurement object may be referred to as a measurement quantity, for example, an RSRP value, an RSRQ value, or an SINR value.

It should be noted that in embodiments of this application, the measurement quantity includes at least one of the following:

First item: a measurement quantity obtained by the terminal device through measurement. In other words, a measurement result obtained by the terminal device by measuring the measurement object is referred to as the measurement quantity, for example, a measurement quantity obtained by the terminal device by performing measurement based on the measurement control information after the terminal device receives the measurement control information, for example, an RSRP value obtained by measuring an RSRP, an RSRQ value obtained by measuring RSRQ, or an SINR value obtained by measuring an SINR.

Second item: a measurement quantity obtained by the terminal device through prediction. In other words, a prediction result obtained by the terminal device by predicting the measurement object is referred to as the measurement quantity, for example, a measurement quantity obtained by the terminal device by performing prediction based on the measurement control information after the terminal device receives the measurement control information, for example, an RSRP value obtained by predicting an RSRP, an RSRQ value obtained by predicting RSRQ, or an SINR value obtained by predicting an SINR. The prediction performed by the terminal device may include prediction performed based on an AI/ML model or prediction performed in another manner. This is not limited in embodiments of this application.

In embodiments of this application, a measurement quantity obtained by the terminal device through prediction may be described as a future measurement quantity, for example, a measurement quantity at a future moment or a measurement quantity in a future time period. For details, refer to descriptions of a configuration 3. Details are not described herein.

The measurement report configuration defines a configuration related to a measurement report, including a reporting evaluation criteria of the measurement report, for example, whether the measurement report is event-triggered or periodically reported.

The measurement event defines an event that triggers reporting of the measurement report and a threshold corresponding to the measurement event.

The measurement control information may be configured via a same message, or may be configured via different messages.

For example, the measurement event may be at least one of an event A1, an event A2, an event A3, an event A4, an event A5, an event A6, an event B1, or an event B2. The threshold corresponding to the measurement event is a reference value for determining whether to the event is entered or left. A specific value of the threshold is configured by a network side based on a historical empirical value.

For example, a timer is triggered when an event is entered, and the timer is stopped when the event is left. TTT indicates a period of time in which an event entry condition is continuously satisfied, namely, trigger duration, and may be configured by the network side or pre-agreed on.

For another example, a counter is triggered when an event is entered, and the counter is stopped when the event is left. NTT indicates a number of times that an event entry condition is continuously satisfied, namely, a quantity of triggering times, and may be configured by the network side or pre-agreed on.

The following describes the measurement events and their corresponding thresholds:

The event A1 indicates that a measurement quantity of the serving cell is greater than a preset threshold. It is assumed that the threshold is Thresh. When an inequality A1-1 is satisfied, the event A1 is entered; and when an inequality A1-2 is satisfied, the event A1 is left, where

the inequality A1-1 (an entry condition): $Ms-Hys>Thresh$; and

the inequality A1-2 (an exit condition): $Ms+Hys<Thresh$, where

Ms is the measurement quantity of the current serving cell, Hys is a hysteresis parameter of this event, and Thresh and Hys may be configured by the network side.

The event A2 indicates that a measurement quantity of the serving cell is less than a preset threshold. It is assumed that the threshold is Thresh. When an inequality A2-1 is satisfied, the event A2 is entered; and when an inequality A2-2 is satisfied, the event A2 is left, where

the inequality A2-1 (an entry condition): $Ms+Hys<Thresh$; and

the inequality A2-2 (an exit condition): $Ms-Hys>Thresh$, where

Ms is the measurement quantity of the current serving cell, Hys is a hysteresis parameter of this event, and Thresh and Hys may be configured by the network side.

The event A3 indicates that a measurement quantity of an intra-frequency neighboring cell is greater than a measurement quantity of a special cell (special cell, SpCell). When an inequality A3-1 is satisfied, the event A3 is entered; and when an inequality A3-2 is satisfied, the event A3 is left, where

the inequality A3-1 (an entry condition): $Mn+Ofn+Ocn-Hys>Mp+Ofp+Ocp+Off$; and

the inequality A3-2 (an exit condition): $Mn+Ofn+Ocn+Hys<Mp+Ofp+Ocp+Off$, where

Mn is the measurement quantity of the intra-frequency neighboring cell, Ofn is a frequency (which may alternatively be replaced with frequency point or frequency band) offset of the intra-frequency neighboring cell, Ocn is a cell individual offset (cell individual offset, CIO) of the intra-frequency neighboring cell, Mp is the measurement quantity of the special cell, Ofp is a frequency (which may alternatively be replaced with frequency point or frequency band) offset of the special cell, Ocp is a cell individual offset of the special cell, Hys is a hysteresis parameter of the event, and Off is an offset parameter of the event, where Mn and Mp are obtained in a measurement procedure, and other parameters may be configured by the network side.

The event A4 indicates that a measurement quantity of an inter-frequency neighboring cell is greater than a preset threshold. It is assumed that the threshold is Thresh. When an inequality A4-1 is satisfied, the event A4 is entered; and when an inequality A4-2 is satisfied, the event A4 is left, where

the inequality A4-1 (an entry condition): $Mn+Of-$

n+Ocn-Hys>Thresh; and

the inequality A4-2 (an exit condition): Mn+Ofn+Ocn+Hys<Thresh, where

Mn is the measurement quantity of the inter-frequency neighboring cell, Ofn is a frequency (which may alternatively be replaced with frequency point or frequency band) offset of the inter-frequency neighboring cell, Ocn is a cell individual offset of the inter-frequency neighboring cell, and Hys is a hysteresis parameter of the event, where Ofn, Ocn, Hys, and Thresh may be configured by the network side.

The event A5 indicates that a measurement quantity of a special cell is less than a first threshold and a measurement quantity of a neighboring cell is greater than a second threshold. It is assumed that the first threshold is ThreshA51 and the second threshold is ThreshA52. When an inequality A5-1 and an inequality A5-2 are satisfied, the event A5 is entered, where a sequence of the two entry conditions is not limited; and when at least one of an inequality A5-3 or an inequality A5-4 is satisfied, the event A5 is left, where

the inequality A5-1 (an entry condition 1): Mp+Hys<ThreshA51;

the inequality A5-2 (an entry condition 2): Mn+Ofn+Ocn-Hys>ThreshA52;

the inequality A5-3 (an exit condition 1): Mp-Hys>ThreshA51; and

the inequality A5-4 (an exit condition 2): Mn+Ofn+Ocn+Hys<ThreshA52, where

Mp is the measurement quantity of the special cell, Mn is the measurement quantity of the neighboring cell, Ofn is a frequency (which may alternatively be replaced with frequency point or frequency band) offset of the neighboring cell, Ocn is a cell individual offset of the neighboring cell, and Hys is a hysteresis parameter of the event, where Ofn, Ocn, Hys, ThreshA51, and ThreshA52 may be configured by the network side.

The event A6 indicates that a measurement quantity of a neighboring cell is greater than a measurement quantity of the serving cell. When an inequality A6-1 is satisfied, the event A6 is entered; and when an inequality A6-2 is satisfied, the event A6 is left, where

the inequality A6-1 (an entry condition): Mn+Ocn-Hys>Ms+Ocs+Off; and

the inequality A6-2 (an exit condition): Mn+Ocn+Hys<Ms+Ocs+Off, where

Ms is the measurement quantity of the serving cell, Mn is the measurement quantity of the neighboring cell, Ocn is a cell individual offset of the neighboring cell, Ocs is a cell individual offset of the serving cell, Hys is a hysteresis parameter of the event, and Off is an offset parameter of the event, where Mn and Ms are obtained in a measurement procedure, and other parameters are configured by the network side.

The event B1 indicates that a measurement quantity of an inter-radio access technology neighboring cell is greater than a preset threshold. It is assumed that the threshold is Thresh. When an inequality B1-1 is satisfied, the event B1 is entered; and when an inequality B1-2 is satisfied, the event B1 is left, where

the inequality B1-1 (an entry condition): Mn+Ofn-Hys>Thresh; and

the inequality B1-2 (an exit condition): Mn+Ofn+Hys<Thresh, where

Mn is the measurement quantity of the inter-radio access technology neighboring cell, Ofn is a frequency (which may alternatively be replaced with frequency point or frequency band) offset of the inter-radio access technology neighboring cell, and Hys is a hysteresis parameter of the event, where Ofn, Hys, and Thresh may be configured by the network side.

The event B2 indicates that a measurement quantity of a special cell is less than a first threshold and a measurement quantity of an inter-radio access technology neighboring cell is greater than a second threshold. It is assumed that the first threshold is ThreshB21 and the second threshold is ThreshB22. When an inequality B2-1 and an inequality B2-2 are satisfied, the event B2 is entered; and when at least one of an inequality B2-3 or an inequality B2-4 is satisfied, the event B2 is left, where

the inequality B2-1 (an entry condition 1): Mp+Hys<ThreshB21;

the inequality B2-2 (an entry condition 2): Mn+Ofn+Ocn-Hys>ThreshB22;

the inequality B2-3 (an exit condition 1): Mp-Hys>ThreshB21; and

the inequality B2-4 (an exit condition 2): Mn+Ofn+Ocn+Hys<ThreshB22, where

Mp is the measurement quantity of the special cell, Mn is the measurement quantity of the inter-radio access technology neighboring cell, Ofn is a frequency (which may alternatively be replaced with frequency point or frequency band) offset of the inter-radio access technology neighboring cell, and Hys is a hysteresis parameter of the event, where Ofn, Ocn, Hys, ThreshB21, and ThreshB22 may be configured by the network side.

It should be noted that the entry condition is a condition that needs to be satisfied for event entering. In addition, meanings of the following descriptions are the same and can be replaced with each other: an entry condition and a trigger condition. The following uses the entry condition as an example for description.

Similarly, the exit condition is a condition that needs to be satisfied for event exiting. In addition, meanings of the following descriptions are the same and can be replaced with each other: an exit condition and a revocation condition. The following uses the exit condition as an example for description.

It should be noted that, if the described entry condition is satisfied, it means that the event is entered. In addition, meanings of the following descriptions are the same and can be replaced with each other: an entry event, a trigger event, an implemented event, and a satisfied event. The following uses the entry event as an example for description.

Similarly, if the described exit condition is satisfied, it means that the event is left. In addition, meanings of the following descriptions are the same and can be replaced with each other: a leave event, a revocation event, an unimplemented event, and an unsatisfied event. The following uses the leave event as an example for description.

For the terminal device, after receiving the measurement control information, the terminal device performs S202.

S202: The terminal device monitors a radio channel based on the measurement control information.

For example, the terminal device monitors the radio channel based on the measurement object indicated by the measurement control information, for example, performs measurement at a specific frequency position and a specific time domain position, to obtain a measurement result, namely, a measurement quantity.

When the measurement result satisfies the measurement event, the terminal device performs S203.

S203: The terminal device sends a measurement report to the first network device. Correspondingly, the first network device receives the measurement report from the terminal device.

For example, the measurement report includes a measurement result of the serving cell, and/or the measurement report includes a measurement result of a neighboring cell of the serving cell. There may be one or more neighboring cells of the serving cell.

S204: The first network device determines a target cell based on the measurement report.

For example, the first network device selects one cell from at least one cell in the measurement report as the target cell based on radio resource management (radio resource management, RRM) information, for example, uses a cell with a best measurement result as the target cell.

S205: The first network device notifies a second network device to perform handover preparation.

The second network device is a network device corresponding to the target cell. The second network device and the first network device may be a same physical device, but provide different cell services; or may be different physical devices.

For example, the first network device sends a handover preparation request (request) to the second network device. Correspondingly, the second network device receives the handover preparation request from the first network device.

The handover preparation request is used to request the second network device to prepare a resource for the terminal device, for example, a terminal access resource.

S206: The terminal device, the first network device, and the second network device perform handover.

For example, for the second network device, after receiving the handover preparation request, the second network device determines, based on a current status of the second network device, whether to establish a connection to the terminal device, and if yes, performs the following operations:

The second network device sends a handover preparation request acknowledgement (acknowledgement, ACK) to the first network device. Correspondingly, the first network device receives the handover preparation request acknowledgement from the second network device.

The first network device sends a handover command (command) to the terminal device. Correspondingly, the terminal device receives the handover command from the first network device. The handover command includes configuration information of the target cell.

The terminal device releases a connection to the first network device according to the handover command. Correspondingly, the first network device also releases the connection to the terminal device.

The terminal device initiates, according to the handover command, a random access (random access channel, RACH) procedure to the second network device corresponding to the target cell. Correspondingly, the second network device corresponding to the target cell and the terminal device perform the RACH procedure.

However, in the processing manner shown in FIG. 2, the target cell is determined by the first network device, and the target cell is determined and selected based on the measurement report reported by the terminal device. Due to complexity and fluctuation of the radio channel, the measurement report represents the measurement result of the radio channel in a configured time period (for example, a time period corresponding to TTT), and lacks prediction and foresight. When channel quality of the target cell is poor, a radio link failure (radio link failure, RLF) or ping-pong handover is likely to occur.

In another possible design, the terminal device predicts the target cell based on an artificial intelligence (artificial intelligence, AI)/a machine learning (machine learning, ML) model. For example, input information of the AI/ML model includes a measurement quantity of the terminal device, for example, a measurement quantity of at least one cell, and output information of the AI/ML model indicates the target cell. Based on the AI/ML model, a cell with a highest probability in the at least one cell serves as the target cell. The highest probability may be understood as a highest probability of in probabilities of the at least one cell each being the target cell.

Although the AI/ML model has a powerful prediction capability, better handover performance, for example, ping-pong handover reduction and RLF reduction, can be achieved to some extent. However, in a procedure of predicting the target cell based on the AI/ML model, the cell with the highest probability is simply selected as the target cell. Probability information of using another cell as the target cell is lost, and a problem of inaccurate prediction of the target cell may still exist.

In conclusion, in a cell handover procedure, there are problems of poor accuracy of handover to the target cell and a high probability of a handover failure.

In view of this, embodiments of this application provide a handover configuration method. The method may be applied to the communication system shown in FIG. 1. The method includes: A first terminal device receives, in a first cell, downlink signaling from a first network device, and determines configuration information based on the downlink signaling, where the configuration information indicates at least one of the following:

a configuration 1: an event related to a probability, where the probability includes a probability of cell handover or a probability that a second cell serves as a target cell, the second cell belongs to a first cell set, and the first cell set includes at least one of the following: the first cell (when the first cell is a cell group, the first cell set may include at least one cell in the cell group), at least one intra-radio access technology neighboring cell of the first cell, or at least one inter-radio access technology (inter-radio access technology, Inter-RAT) neighboring cell of the first cell; and

in the configuration 1, when the target cell is different from the first cell, the target cell is a cell accessed by the first terminal device after the first terminal device performs the cell handover, and the cell handover is an operation that can be performed by the first terminal device; or when the target cell overlaps the first cell, it means that the first terminal device may not perform the cell handover;

a configuration 2: determining first information based on a first submodel, where the first submodel is a part of the following model: an AI model or an ML model, and the first information is used for the cell handover; and

a configuration 3: an event related to a measurement quantity at a first moment or a measurement quantity in a first time period, where the first moment includes a future moment, the first time period includes a future time period, and the measurement quantity at the first moment or the measurement quantity in the first time period is obtained by the first terminal device through prediction.

In the configuration 3, a prediction result of a measurement object may also be referred to as a measurement quantity without causing confusion.

In other words, the first network device configures one or more configurations, for example, the configuration 1, the configuration 2, or the configuration 3, for the first terminal device by using the configuration information, to optimize a cell handover-related configuration.

Specifically, in the configuration 1, the event of the configuration 1 is related to the probability, and is predictive and forward-looking. For example, the probability that the first cell serves as the target cell can represent a confidence level that the first cell serves as the target cell. The probability of cell handover can represent a necessity of performing the cell handover.

In the configuration 2, the first information is information obtained by performing processing using the first submodel. Because the first submodel is a part of the AI/ML model, the first information does not indicate the target cell, but is information used for the cell handover.

In the configuration 3, the event of the configuration 3 is related to the measurement quantity at the future moment or in the future time period, and is also predictive and forward-looking.

For the events defined in the configuration 1 and the configuration 3, other parameters are also referenced, such as a threshold and an offset value that correspond to the events. Similarly, in the configuration 2, after the first terminal device determines the first information based on the first submodel, the first network device determines, based on the first information, or based on the first information and reference information on a network side (for example, a load status of each cell), whether to perform the cell handover, or determines the target cell based on the first information and reference information on a network side. In comparison with determining the target cell based only on a measurement quantity in a configured time period, or simply selecting a cell with a highest probability as the target cell, the optimized configuration in this application enables a communication device to predict, with reference to more information, whether to perform the cell handover or determine the target cell, to help improve accuracy and a success rate of the handover.

It should be understood that, in the following embodiments of this application, a name of a message between devices or a name or the like of each parameter in the message is merely an example, and may alternatively be another name in a specific implementation. This is not specifically limited in embodiments of this application.

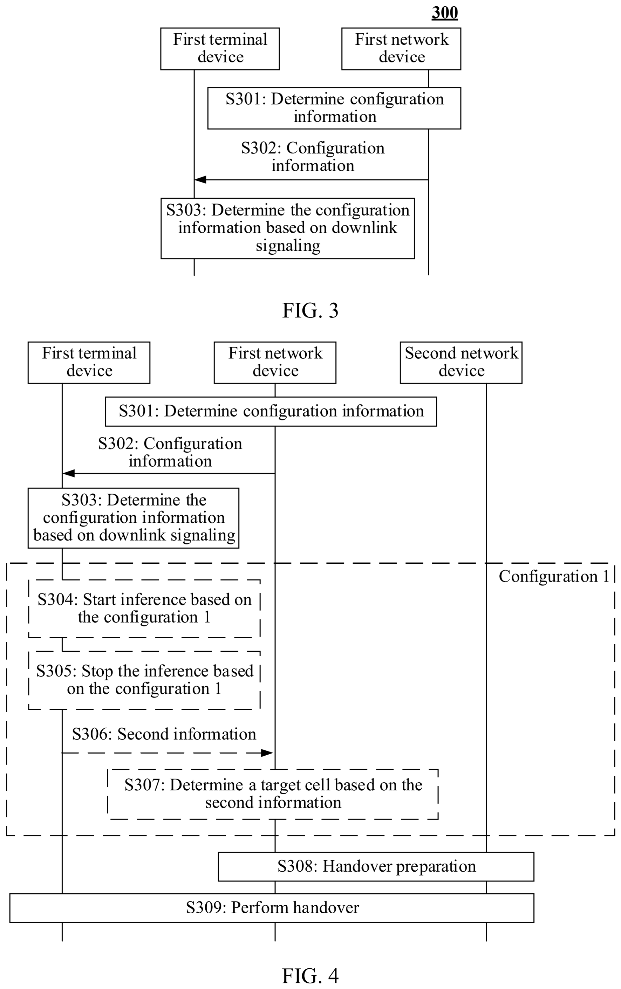

With reference to FIG. 3 to FIG. 5, the following describes in detail the handover configuration method provided in embodiments of this application. A handover configuration method 300 provided in an embodiment of this application includes the following operations.

S301: A first network device determines configuration information.

For example, the first network device is a network device corresponding to a source cell of a first terminal device, namely, a network device accessed by the first terminal device before the first terminal device performs cell handover.

The configuration information indicates a measurement configuration, for example, one or more of a configuration 1, a configuration 2, and a configuration 3. For details, refer to descriptions after S303. Details are not described herein.

S302: The first network device sends, in a first cell, downlink signaling to the first terminal device. Correspondingly, the first terminal device receives, in the first cell, the downlink signaling from the first network device.

The first cell is a cell accessed by the first terminal device before the first terminal device performs the cell handover.

In embodiments of this application, the first cell may be one cell, or may be one cell group.

For example, in different scenarios, the first cell is one of the following or includes at least one of the following:

1. Primary cell (primary cell, PCell): also known as a master cell group (master cell group, MCG) cell. It operates on a primary frequency, in which the first terminal device performs an initial connection establishment procedure or initiates a connection re-establishment procedure.

Descriptions in a related technical specification are as follows:

PCell: The MCG (Master Cell Group) cell, operating on the primary frequency, in which the UE either performs the initial connection establishment procedure or initiates the connection re-establishment procedure.

2. Primary secondary cell group cell (primary secondary cell group cell, PSCell): It may be understood a secondary cell group (secondary cell group, SCG) cell in which the first terminal device performs random access when performing a reconfiguration with synchronization (Reconfiguration with Sync) procedure, for the first terminal device configured with dual connectivity (dual connectivity, DC).

Descriptions in a related technical specification are as follows:

PSCell: For a dual connectivity operation, the SCG cell in which the UE performs random access when performing the Reconfiguration with Sync procedure.

3. Secondary cell (secondary cell, SCell): It may be understood as a cell providing additional radio resources on the top of a special cell (special cell, SpCell), for the first terminal device configured with carrier aggregation (carrier aggregation, CA). In embodiments of this application, for the special cell, refer to the following descriptions of point 5. Details are not described herein.

Descriptions in a related technical specification are as follows:

SCell: For a UE configured with CA, a cell providing additional radio resources on top of Special Cell.

4. Serving cell (serving cell): It may be understood that, for the first terminal device in an RRC connected mode (RRC_CONNECTED) not configured with CA/DC, there is only one serving cell including a primary cell; and for the first terminal device in RRC_CONNECTED configured with CA/DC, the serving cell represents a cell set including a special cell (Special cell) and all secondary cells.

Descriptions in a related technical specification are as follows:

Serving Cell: For a UE in RRC_CONNECTED not configured with CA/DC there is only one serving cell including of the primary cell. For a UE in RRC_CONNECTED configured with CA/DC the term 'serving cells' is used to denote the set of cells including of the Special Cell(s) and all secondary cells.

5. Special cell: It may be understood that, for the first terminal device configured with dual connectivity, the SpCell is a PCell of an MCG or a PSCell of an SCG. If dual connectivity is not configured, the SpCell refers to a PCell.

Descriptions in a related technical specification are as follows:

Special Cell (SpCell): For a Dual Connectivity operation, the term Special Cell refers to the PCell of the MCG or the PSCell of the SCG, otherwise the term Special Cell refers to the PCell.

The downlink signaling includes the configuration information. The configuration information may be configured by using one piece of signaling or by using a plurality of pieces of signaling.

For example, the downlink signaling is RRC signaling, for example, RRC reconfiguration (RRCReconfiguration). In other words, the first network device performs measurement configuration in an RRC procedure.

For example, the first network device sends, in the first cell, the RRCReconfiguration to the first terminal device. Correspondingly, the first terminal device receives the RRCReconfiguration from the first network device. The RRCReconfiguration includes the configuration information. After the first terminal device successfully receives the RRCReconfiguration, the first terminal device sends RRC reconfiguration complete (RRCReconfiguration complete) to the first network device. Correspondingly, the first network device receives the RRCReconfiguration complete from the first terminal device.

S303: The first terminal device determines the configuration information based on the downlink signaling.

For example, the downlink signaling is RRC signaling. The first terminal device obtains the configuration information from the RRC signaling.

In S301 to S303, descriptions of the configuration information are as follows:

The configuration information indicates at least one of the following:

a configuration 1: an event related to a probability, where the probability includes a probability of cell handover or a probability that a second cell serves as a target cell, the second cell belongs to a first cell set, and the first cell set includes at least one of the following: the first cell, at least one intra-radio access technology neighboring cell of the first cell, or at least one inter-radio access technology neighboring cell of the first cell; and when the second cell is different from the first cell, the target cell is a cell accessed by the first terminal device after the first terminal device performs the cell handover, and the cell handover is an operation that can be performed by the first terminal device; or when the second cell overlaps the first cell, it means that the first terminal device may not perform the cell handover;

a configuration 2: determining first information based on a first submodel, where the first submodel is a part of the following model: an AI model or an ML model, and the first information is used for cell handover; and

a configuration 3: an event related to a measurement quantity at a first moment or a measurement quantity in a first time period, where the first moment includes a future moment, the first time period includes a future time period, and the measurement quantity at the first moment or the measurement quantity in the first time period is obtained by the first terminal device through prediction.

Next, events in the configuration 1 are described in detail.

Event 1: A probability that the first cell serves as the target cell is greater than a threshold, where

an entry condition: M1>Thresh; and
an exit condition: M1<Thresh, where
M1 indicates the probability that the first cell serves as the target cell, and Thresh indicates the threshold of the event 1.

In the event 1, the first cell is the same as the second cell. For the first cell, refer to the descriptions of S302. Details are not described herein again.

For example, in a possible implementation, the event 1 is used to stop inter-frequency/inter-radio access technology measurement. In other words, there is high probability that the first cell serves as the target cell, the first terminal device may stop measurement, for example, inter-frequency/inter-radio access technology measurement, to reduce terminal power consumption.

In some embodiments, the event 1 may further have the following form:

Conditions of the event 1 include:

an entry condition: M1-Hys>Thresh; and
an exit condition: M1+Hys<Thresh, where
M1 indicates the probability that the first cell serves as the target cell, Thresh indicates the threshold of the event 1, and Hys indicates a hysteresis parameter of the event 1, so that determining of the event 1 is more stable.

It should be understood that in the event 1, M1 is determined by the first terminal device. Each parameter of Thresh and Hys may be configured by a network side, may be agreed on by two communication parties, or may be determined by the first terminal device. This is not limited in embodiments of this application.

Event 2: A probability that the first cell serves as the target cell is less than a threshold, where

an entry condition: M1<Thresh; and
an exit condition: M1>Thresh, where
M1 indicates the probability that the first cell serves as the target cell, and Thresh indicates the threshold of the event 2.

It is easy to understand that in the event 2, the first cell is the same as the second cell. For the first cell, refer to the descriptions of S302. Details are not described herein again.

For example, in a possible implementation, the event 2 is used to start inter-frequency/inter-radio access technology measurement. In other words, there is a low probability that the first cell serves as the target cell the first terminal device may start measurement, for example, inter-frequency/inter-radio access technology measurement. When a measurement quantity of inter-frequency/inter-radio access technology measurement is used for cell handover (for example, used to determine whether to perform the cell handover, and/or used to determine the target cell accessed by the first terminal device after the cell handover), the inter-frequency/inter-radio access technology measurement is started in a timely manner. This helps reduce an unnecessary delay of the cell handover.

In some embodiments, the event 2 may further have the following form:
Conditions of the event 2 include:

an entry condition: M1+Hys<Thresh; and
an exit condition: M1-Hys>Thresh, where
M1 indicates the probability that the first cell serves as the target cell, Thresh indicates the threshold of the event 2, and Hys indicates a hysteresis parameter of the event 2, so that determining of the event 2 is more stable.

It should be understood that in the event 2, M1 is determined by the first terminal device. Each parameter of Thresh and Hys may be configured by a network side, may be agreed on by two communication parties, or may be determined by the first terminal device. This is not limited in embodiments of this application.

Event 3: The probability that the second cell serves as the target cell is greater than a probability that the first cell serves as the target cell, where

an entry condition: M2>M1; and
an exit condition: M2<M1, where
M2 indicates the probability that the second cell serves as the target cell, and M1 indicates the probability that the first cell serves as the target cell.

It is easy to understand that the first cell is different from the second cell.

In a possible implementation:
In the event 3, the second cell is at least one intra-radio access technology neighboring cell, for example, an intra-frequency neighboring cell or an inter-frequency neighboring cell, of the first cell.

When the second cell is an intra-radio access technology neighboring cell of the first cell, it may be understood that the event 3 indicates a probability that an intra-frequency/inter-frequency neighboring cell serves as the target cell is greater than the probability that the first cell serves as the target cell.

For example, in a possible implementation, the event 3 is used to start intra-frequency/inter-frequency handover. In other words, there is a high probability that the intra-frequency/inter-frequency neighboring cell of the first cell serves as the target cell. In this case, in an example, the first terminal device sends a probability-related and/or measurement-related report to the first network device, and the first network device performs determining, based on the report, and starts cell handover. For example, the first network device sends a handover preparation request to a network device corresponding to the target cell, or sends a handover indication to the first terminal device. Correspondingly, the first terminal device may perform the cell handover. Refer to the descriptions of FIG. 2. Details are not described herein again.

In a possible implementation, the event 3 may be denoted as an event 31.

In some embodiments, the event 31 may further have the following form:
Conditions of the event 31 include:

an entry condition: M2+Of2+Oc2-Hys>M1+Of1+Oc1+Off; and
an exit condition: M2+Of2+Oc2+Hys<M1+Of1+Oc1+Off, where
M2 indicates the probability that the second cell serves as the target cell, M1 indicates the probability that the first cell serves as the target cell, and Off indicates an offset value of the event 31;
Of2 indicates a first offset (the first offset may be related to a frequency, a frequency band, or a frequency point) of the probability that the second cell serves as the target cell; Oc2 indicates a second offset (the second offset may be related to the second cell) of the probability that the second cell serves as the target cell;
Of1 indicates a first offset (the first offset may be related to a frequency, a frequency band, or a frequency point) of the probability that the first cell serves as the target cell; Oc1 indicates a second offset (the second offset may be related to the first cell) of the probability that the first cell serves as the target cell; and
Hys indicates a hysteresis parameter of the event 31.

In the event 31, more parameters, such as Of2, Oc2, Of1, Oc1, Hys, and Off, are referenced, so that determining of the event 31 is more accurate, more flexible, and more stable.

It should be understood that in the event 31, M1 and M2 are determined by the first terminal device. Each of the parameters such as Of2, Oc2, Of1, Oc1, Hys, and Off may be configured by a network side, may be agreed on by two communication parties, or may be determined by the first terminal device. This is not limited in embodiments of this application.

It should be understood that, in the event 31, the parameters such as Of2, Oc2, Of1, Oc1, Hys, and Off are all optional parameters, in other words, only some of the parameters may be used in an expression of the entry condition and/or an expression of the exit condition. For example, a possible expression of the entry condition is M2+Of2-Hys>M1+Oc1+Off. Other more possible expressions of the entry condition or the exit condition may be deduced by analogy. Details are not described again.

In another possible implementation, the event 3 may be denoted as an event 32.

Conditions of the event 32 include:

an entry condition: M2+Oc2-Hys>M1+Oc1+Off; and
an exit condition: M2+Oc2+Hys<M1+Oc1+Off, where
M2 indicates the probability that the second cell serves as the target cell, M1 indicates the probability that the first cell serves as the target cell, and Off indicates an offset value of the event 32;
Oc2 indicates an offset of the probability that the second cell serves as the target cell; Oc1 indicates an offset of the probability that the first cell serves as the target cell; and
Hys indicates a hysteresis parameter of the event 32.

In the event 32, more parameters, such as Oc2, Oc1, Hys, and Off, are referenced, making the determining of the event 32 more accurate, flexible, and stable.

It should be understood that in the event 32, M1 and M2 are determined by the first terminal device. Each of the parameters such as Oc2, Oc1, Hys, and Off may be configured by a network side, may be agreed on by two communication parties, or may be determined by the first terminal device. This is not limited in embodiments of this application.

It should be understood that, in the event 32, the parameters such as Oc2, Oc1, Hys, and Off are all optional parameters, in other words, only some of the parameters may be used in an expression of the entry condition and/or an expression of the exit condition. This is not limited in embodiments of this application.

Event 4: The probability that the second cell serves as the target cell is greater than a threshold, where

> an entry condition: M2>Thresh; and
> an exit condition: M2<Thresh, where
> M2 indicates the probability that the second cell serves as the target cell, and Thresh indicates the threshold of the event 4.

It may be understood that, in a possible implementation:

In the event 4, the second cell is at least one intra-radio access technology neighboring cell, for example, an intra-frequency neighboring cell or an inter-frequency neighboring cell, of the first cell.

It may be understood that the event 4 indicates that a probability that the intra-frequency/inter-frequency neighboring cell serves as the target cell is greater than a specific threshold.

For example, in a possible implementation, the event 4 is used to start intra-frequency/inter-frequency handover. In other words, there is a high probability that the intra-frequency/inter-frequency cell serves as the target cell. In this case, in an example, the first terminal device sends a probability-related and/or measurement-related report to the first network device, and the first network device performs determining, based on the report, and starts cell handover. For example, the first network device sends a handover preparation request to a network device corresponding to the target cell, or sends a handover indication to the first terminal device. Correspondingly, the first terminal device may perform the cell handover. Refer to the descriptions of FIG. 2. Details are not described herein again.

In another possible implementation:

In the event 4, the second cell is at least one inter-radio access technology neighboring cell of the first cell.

It may be understood that the event 4 indicates that a probability that the inter-radio access technology neighboring cell serves as the target cell is greater than a specific threshold.

For example, in a possible implementation, the event 4 is used to start inter-radio access technology handover. In other words, there is a high probability that the inter-radio access technology neighboring cell serves as the target cell. In this case, in an example, the first terminal device sends a probability-related and/or measurement-related report to the first network device, and the first network device performs determining, based on the report, and starts cell handover. For example, the first network device sends a handover preparation request to a network device corresponding to the target cell, or sends a handover indication to the first terminal device. Correspondingly, the first terminal device may perform the cell handover. Refer to the descriptions of FIG. 2. Details are not described herein again.

In some embodiments, the event 4 may further have the following form:

Conditions of the event 4 include:

> an entry condition: M2+Of2+Oc2-Hys>Thresh; and
> an exit condition: M2+Of2+Oc2+Hys<Thresh, where M2 indicates the probability that the second cell serves as the target cell, and Thresh indicates the threshold of the event 4;
> Of2 indicates a first offset (the first offset may be related to a frequency, a frequency band, or a frequency point) of the probability that the second cell serves as the target cell; Oc2 indicates a second offset (the second offset may be related to the second cell) of the probability that the second cell serves as the target cell; and Hys indicates a hysteresis parameter of the event 4.

In the event 4, more parameters, such as Of2, Oc2, and Hys, are referenced, so that determining of the event 4 is more accurate, flexible, and stable.

It should be understood that in the event 4, M2 is determined by the first terminal device. Each of parameters such as Thresh, Of2, Oc2, and Hys may be configured by a network side, may be agreed on by two communication parties, or may be determined by the first terminal device. This is not limited in embodiments of this application.

It should be understood that, in the event 4, the parameters such as Of2, Oc2, and Hys are all optional parameters, in other words, only some of the parameters may be used in an expression of the entry condition and/or an expression of the exit condition. This is not limited in embodiments of this application.

Event 5: A probability that the first cell serves as the target cell is less than a first threshold, and the probability that the second cell serves as the target cell is greater than a second threshold, where

> an entry condition: M1<Thresh51 and M2>Thresh52; and
> an exit condition: M1>Thresh51 and/or M2<Thresh52, where
> M1 indicates the probability that the first cell serves as the target cell, and Thresh51 indicates the first threshold of the event 5; and
> M2 indicates the probability that the second cell serves as the target cell, and Thresh52 indicates the second threshold of the event 5.

It is easy to understand that the first cell is different from the second cell.

In a possible implementation:

In the event 5, the second cell is at least one intra-radio access technology neighboring cell, for example, an intra-frequency neighboring cell or an inter-frequency neighboring cell, of the first cell.

It may be understood that the event 5 indicates that the probability that the first cell serves as the target cell is less than a specific threshold (for example, Thresh51), and a probability that the intra-radio access technology neighboring cell serves as the target cell is greater than a specific threshold (for example, Thresh52).

For example, the event 5 is used to start cell handover. In this case, in an example, the first terminal device sends a probability-related and/or measurement-related report to the first network device, and the first network device performs determining, based on the report, and starts cell handover. For example, the first network device sends a handover preparation request to a network device corresponding to the target cell, or sends a handover indication to the first terminal device. Correspondingly, the first terminal device may perform the cell handover. Refer to the descriptions of FIG. 2. Details are not described herein again.

In another possible implementation:

In the event 5, the second cell is at least one inter-radio access technology neighboring cell of the first cell.

It may be understood that the event 5 indicates that the probability that the first cell serves as the target cell is less than a specific threshold (for example, Thresh51), and a probability that the inter-radio access technology neighboring cell serves as the target cell is greater than a specific threshold (for example, Thresh52).

For example, the event 5 is used to start cell handover. In this case, in an example, the first terminal device sends a probability-related and/or measurement-related report to the first network device, and the first network device performs determining, based on the report, and starts cell handover. For example, the first network device sends a handover preparation request to a network device corresponding to the target cell, or sends a handover indication to the first terminal device. Correspondingly, the first terminal device may perform the cell handover. Refer to the descriptions of FIG. 2. Details are not described herein again.

In some embodiments, the event 5 may further have the following form:

an entry condition: M1+Hys51<Thresh51 and M2+Of2+Oc2-Hys52>Thresh52; and
an exit condition: M1-Hys51>Thresh51 and/or M2+Of2+Oc2+Hys52<Thresh52, where
M1 indicates the probability that the first cell serves as the target cell, and Thresh51 indicates the first threshold of the event 5; and
M2 indicates the probability that the second cell serves as the target cell, and Thresh52 indicates the second threshold of the event 5, where Thresh51 and Thresh52 may be the same or different;
Of2 indicates a first offset (the first offset may be related to a frequency, a frequency band, or a frequency point) of the probability that the second cell serves as the target cell; Oc2 indicates a second offset (the second offset may be related to the second cell) of the probability that the second cell serves as the target cell; and
Hys51 indicates a first hysteresis parameter of the event 5, and Hys52 indicates a second hysteresis parameter of the event 5, where Hys51 and Hys52 may be the same or different;

In the event 5, more parameters, such as Of2, Oc2, Hys51, and Hys52, are referenced, so that determining of the event 5 is more accurate, more flexible, and more stable.

It should be understood that in the event 5, M1 and M2 are determined by the first terminal device. Each of parameters such as Thresh51, Thresh52, Of2, Oc2, Hys51, and Hys52 may be configured by a network side, may be agreed on by two communication parties, or may be determined by the first terminal device. This is not limited in embodiments of this application.

It should be understood that, in the event 5, the parameters such as Of2, Oc2, Hys51, and Hys52 are all optional parameters, in other words, only some of the parameters may be used in an expression of the entry condition and/or an expression of the exit condition. This is not limited in embodiments of this application.

Event 6: The probability that the second cell serves as the target cell is greater than an offset value of a probability that a third cell in the first cell set serves as the target cell, where

an entry condition: M2>Mx+Off; and
an exit condition: M2<Mx+Off, where
M2 indicates the probability that the second cell serves as the target cell, and the second cell is a cell that is in the first cell set and that has a highest probability of being the target cell; and
Mx indicates the probability that the third cell serves as the target cell, the third cell is any cell in the first cell set other than the second cell, and Off indicates the offset value of the event 6.

It may be understood that, in a possible implementation:

In the event 6, the second cell may be the first cell.

In a possible example, it may be understood that the event 6 is used to determine that cell handover is not required temporarily. In other words, there is a high probability that the first cell serves as the target cell, and the first terminal device does not need to perform the cell handover.

In another possible implementation:

In the event 6, the second cell is a cell in the first cell set other than the first cell.

In a possible example, it may be understood that the event 6 is used to start handover. In other words, there is a high probability that at least one cell other than the first cell serves as the target cell. In this case, in an example, the first terminal device sends a probability-related and/or measurement-related report to the first network device, and the first network device performs determining, based on the report, and starts cell handover. For example, the first network device sends a handover preparation request to a network device corresponding to the target cell, or sends a handover indication to the first terminal device. Correspondingly, the first terminal device may perform the cell handover. Refer to the descriptions of FIG. 2. Details are not described herein again.

In some embodiments, the event 6 may further have the following form:

an entry condition: M2+Of2+Oc2-Hys>Mx+Ofx+Ocx+Off; and
an exit condition: M2+Of2+Oc2+Hys<Mx+Ofx+Ocx+Off, where
M2 indicates the probability that the second cell serves as the target cell, and the second cell is a cell that is in the first cell set and that has a highest probability of being the target cell;
Mx indicates the probability that the third cell serves as the target cell, the third cell is any cell in the first cell set other than the second cell, and Off indicates the offset value of the event 6;
Of2 indicates a first offset (the first offset may be related to a frequency, a frequency band, or a frequency point) of the probability that the second cell serves as the target cell; Oc2 indicates a second offset (the second offset may be related to the second cell) of the probability that the second cell serves as the target cell;
Ofx indicates a first offset (the first offset may be related to a frequency, a frequency band, or a frequency point) of the probability that the third cell serves as the target cell; Ocx indicates a second offset (the second offset may be related to the third cell) of the probability that the third cell serves as the target cell; and Hys indicates a hysteresis parameter of the event 6.

In the event 6, more parameters, such as Of2, Oc2, Ofx, Ocx, and Hys, are referenced, so that determining of the event 6 is more accurate, flexible, and stable.

It should be understood that in the event 6, M2 is determined by the first terminal device. Each of parameters such as Off, Of2, Oc2, Ofx, Ocx, and Hys may be configured by a network side, may be agreed on by two communication parties, or may be determined by the first terminal device. This is not limited in embodiments of this application.

It should be understood that, in the event 6, the parameters such as Of2, Oc2, Ofx, Ocx, and Hys are all optional parameters, in other words, only some of the parameters may be used in an expression of the entry condition and/or an expression of the exit condition. This is not limited in embodiments of this application.

Event 7: The probability that the second cell serves as the target cell is less than an offset value of a probability that a third cell in the first cell set serves as the target cell, where

an entry condition: M2<Mx+Off; and
an exit condition: M2>Mx+Off, where
M2 indicates the probability that the second cell serves as the target cell, and the second cell is a cell that is in the first cell set and that has a highest probability of being the target cell; and
Mx indicates the probability that the third cell serves as the target cell, the third cell is any cell in the first cell set other than the second cell, and Off indicates the offset value of the event 7.

It is easy to understand that, in the event 7, the second cell may be the first cell, or may be a cell in the first cell set other than the first cell.

It may be understood that, in a possible implementation:
The event 7 indicates, in terms of probability, that there is no cell that has a high probability of being the target cell, and it is difficult to determine whether to perform cell handover or determine the target cell. Therefore, for example, the first terminal device may suspend performing target cell probability inference, to reduce terminal power consumption.

In some embodiments, the event 7 may further have the following form:

an entry condition: M2+Of2+Oc2+Hys<Mx+Ofx+Ocx+Off; and
an exit condition: M2+Of2+Oc2-Hys>Mx+Ofx+Ocx+Off, where
M2 indicates the probability that the second cell serves as the target cell, and the second cell is a cell that is in the first cell set and that has a highest probability of being the target cell;
Mx indicates the probability that the third cell serves as the target cell, the third cell is any cell in the first cell set other than the second cell, and Off indicates the offset value of the event 7;
Of2 indicates a first offset (the first offset may be related to a frequency, a frequency band, or a frequency point) of the probability that the second cell serves as the target cell; Oc2 indicates a second offset (the second offset may be related to the second cell) of the probability that the second cell serves as the target cell;
Ofx indicates a first offset (the first offset may be related to a frequency, a frequency band, or a frequency point) of the probability that the third cell serves as the target cell; Ocx indicates a second offset (the second offset may be related to the third cell) of the probability that the third cell serves as the target cell; and Hys indicates a hysteresis parameter of the event 7.

In the event 7, more parameters, such as Of2, Oc2, Ofx, Ocx, and Hys, are referenced, so that determining of the event 7 is more accurate, flexible, and stable.

It should be understood that in the event 7, M2 and Mx are determined by the first terminal device. Each of parameters such as Off, Of2, Oc2, Ofx, Ocx, and Hys may be configured by a network side, may be agreed on by two communication parties, or may be determined by the first terminal device. This is not limited in embodiments of this application.

It should be understood that, in the event 7, the parameters such as Of2, Oc2, Ofx, Ocx, and Hys are all optional parameters, in other words, only some of the parameters may be used in an expression of the entry condition and/or an expression of the exit condition. This is not limited in embodiments of this application.

Event 8: A sum of probabilities of $k$ cells with higher probabilities of being the target cell is greater than a threshold, where

an entry condition: $\sum_{i=1}^{k} M_i > \text{Thresh}$ ; and

an exit condition: $\sum_{i=1}^{k} M_i < \text{Thresh}$ , where $M_i$ indicates a probability that an $i^{\text{th}}$ cell in the $k$ cells serves as the target cell, the $k$ cells are first $k$ cells in the first cell set with higher probabilities of being the target cell, the first cell set includes N cells, where $k \leq N$, and $k$ and $N$ are positive integers, and Thresh indicates the threshold of the event 8.

It is easy to understand that, in the event 8, the foregoing $k$ cells may include the first cell, or may not include the first cell.

For example, the event 8 is used to start another AI/ML model, to comprehensively determine the target cell.

For example, the first terminal device starts an AI/ML model 1, roughly estimates, by using the AI/ML model 1, a probability that each of the N cells serves as the target cell, and then uses the first $k$ cells that have higher probabilities in the N cells for determining the event 8.

If the entry condition of the event 8 is satisfied, the AI/ML model 2 is started, a probability that each of the foregoing $k$ cells serves as the target cell is accurately estimated by using the AI/ML model 2, and then the target cell is determined based on the accurately estimated probabilities. The model may have high running energy consumption during accurate estimation. Therefore, during accurate estimation, the AI/ML model 2 is started only when the event 8 is satisfied, and accurate estimation is performed only for the $k$ cells, instead of performing accurate estimation on the N cells. This helps reduce running energy consumption on a terminal device side, and can further ensure accuracy of the target cell.

If the entry condition of the event 8 is not satisfied, the AI/ML model 2 is not started, to reduce the running energy consumption on the terminal device side.

In a possible implementation, the AI/ML model 1 may be a lightweight AI/ML model, and have low running energy consumption. The AI/ML model 2 may be complex, and have high running energy consumption.

In some embodiments, the event 8 may further have the following form:

an entry condition: $\sum_{i=1}^{k} M_i - Hys > \text{Thresh}$ ; and

an exit condition: $\sum_{i=1}^{k} M_i + Hys < \text{Thresh}$ , where $M_i$ indicates a probability that an $i^{\text{th}}$ cell in the $k$ cells serves as the target cell, the $k$ cells are first $k$ cells in the first cell set with higher probabilities of being the target cell, the first cell set includes N cells, where $k \leq N$, and $k$ and $N$ are positive integers, and Thresh indicates the threshold of the event 8; and Hys indicates a hysteresis parameter of the event 8, so that determining of the event 8 is more accurate, flexible, and stable.

It should be understood that in the event 8, $M_i$ is determined by the first terminal device. Each parameter of $k$, N, Thresh, and Hys may be configured by a network side, may be agreed on by two communication parties, or may be determined by the first terminal device. This is not limited in embodiments of this application.

Event 9: A sum of probabilities of $k$ cells with higher probabilities of being the target cell is less than a threshold, where

an entry condition: $\sum_{i=1}^{k} M_i < \text{Thresh}$ ; and

an exit condition: $\sum_{i=1}^{k} M_i > \text{Thresh}$ , where $M_i$ indicates a probability that an $i^{\text{th}}$ cell in the $k$ cells serves as the target cell, the $k$ cells are first $k$ cells in the first cell set with higher probabilities of being the target cell, the first cell set includes N cells, where $k \leq N$, and $k$ and $N$ are positive integers, and Thresh indicates the threshold of the event 9.

It is easy to understand that, in the event 9, the foregoing $k$ cells may include the first cell (or may be alternatively described as a source cell or a serving cell), or may not include the first cell.

For example, the event 9 is used to temporarily stop AI/ML model inference.

For example, the first terminal device starts an AI/ML model 1, roughly estimates, by using the AI/ML model 1, a probability that each of the N cells serves as the target cell, and then uses the first $k$ cells that have higher probabilities in the N cells for determining the event 9.

If the entry condition of the event 9 is satisfied, inference using the AI/ML model 1 is temporarily stopped, to help reduce running energy consumption on a terminal device side.

In some embodiments, the event 9 may further have the following form:

an                        entry                        condition:

$$\sum_{i=1}^{k} M_i + Hys < \text{Thresh}$$ ; and

an exit condition: $\sum_{i=1}^{k} M_i - Hys > \text{Thresh}$, where

$M_i$ indicates a probability that an $i^{th}$ cell in the $k$ cells serves as the target cell, the $k$ cells are first $k$ cells in the first cell set with higher probabilities of being the target cell, the first cell set includes N cells, where $k \le N$, and $k$ and $N$ are positive integers, and Thresh indicates the threshold of the event 9; and Hys indicates a hysteresis parameter of the event 9, so that determining of the event 9 is more accurate, flexible, and stable.

It should be understood that in the event 9, $M_i$ is determined by the first terminal device. Each parameter of $k$, N, Thresh, and Hys may be configured by a network side, may be agreed on by two communication parties, or may be determined by the first terminal device. This is not limited in embodiments of this application.

Event 10: The probability of cell handover is greater than a threshold, where

an entry condition: $P$>Thresh; and
an exit condition: $P$<Thresh, where
$P$ indicates the probability that the cell handover needs to be performed, and Thresh indicates the threshold corresponding to the event 10.

For example, in an example, the event 10 is used to start the handover. In other words, there is a high necessity for performing the cell handover, and the first terminal device may perform the cell handover.

In another example, the event 10 may further be used to start another event or an AI/ML model, to accurately determine the target cell. An AI/ML model of the event 10 may be simple, and an AI/ML model for accurately determining the target cell may be complex and have high power consumption. The AI/ML model for accurately determining the target cell is started only when the event 10 is satisfied, so that terminal power consumption can be reduced.

In addition, the inequality of the event 10 may alternatively be replaced with an entry condition: $P$<Thresh; and an exit condition: $P$>Thresh, where $\overline{P}$ indicates a probability that the cell handover does not need to be performed, and Thresh indicates a threshold corresponding to the event 10.

It may be understood that the probability that the cell handover does not need to be performed is less than a specific threshold.

In some embodiments, the event 10 may further have the following form:

an entry condition: $P$ - $Hys$>Thresh; and
an exit condition: $P$ + $Hys$<Thresh, where
$P$ indicates the probability that the cell handover needs to be performed, and Thresh indicates the threshold corresponding to the event 10; and Hys indicates a hysteresis parameter of the event 10, so that determining of the event 10 is more accurate, flexible, and stable.

It should be understood that in the event 10, P is determined by the first terminal device. Each parameter of Thresh and Hys may be configured by a network side, may be agreed on by two communication parties, or may be determined by the first terminal device. This is not limited in embodiments of this application.

Event 11: The probability of cell handover is less than a threshold, where

an entry condition: $P$<Thresh; and
an exit condition: $P$>Thresh, where
$P$ indicates the probability that the cell handover needs to be performed, and Thresh indicates the threshold corresponding to the event 11.

For example, in an example, the event 11 is used to temporarily stop AI/ML model inference.

For example, the first terminal device starts an AI/ML model 1, estimates a probability $P$ of cell handover by using the AI/ML model 1, and then uses the probability P of cell handover for determining the event 11.

If the entry condition of the event 11 is satisfied, inference using the AI/ML model 1 is temporarily stopped, to help reduce running energy consumption on a terminal device side.

In addition, the inequality of the event 11 may alternatively be replaced with an entry condition: $P$>Thresh; and an exit condition: $P$<Thresh, where $\overline{P}$ indicates a probability that the cell handover does not need to be performed, and Thresh indicates a threshold corresponding to the event 11.

It may be understood that the probability that the cell handover does not need to be performed is greater than a specific threshold.

In some embodiments, the event 11 may further have the following form:

an entry condition: $P + Hys < $ Thresh; and

an exit condition: $P - Hys > $ Thresh, where

$P$ indicates the probability that the cell handover needs to be performed, and Thresh indicates the threshold corresponding to the event 11; and Hys indicates a hysteresis parameter of the event 11, so that determining of the event 11 is more accurate, flexible, and stable.

It should be understood that in the event 11, P is determined by the first terminal device. Each parameter of Thresh and Hys may be configured by a network side, may be agreed on by two communication parties, or may be determined by the first terminal device. This is not limited in embodiments of this application.

For the foregoing event 1 to the foregoing event 11, the following supplementary descriptions are provided:

First, M1, M2, Mx, $M_i$, and P/$\overline{P}$ are determined by the first terminal device, and each of other several parameters (such as Of2, Oc2, Of1, Oc1, and Hys) may be configured by the network side, pre-agreed on, or determined by the first terminal device. This is not limited in embodiments of this application.

Different from M1, M2, Mx, $M_i$, and P/$\overline{P}$, for the other parameters (such as Of2, Oc2, Of1, Oc1, Hys, Off, Thresh, k and N) that may be configured by the network side, pre-agreed on, or determined by the first terminal device, parameters having a same meaning in different events may have a same value, or may have different values. For example, a threshold serves as an example, Thresh of the event 1 may be the same as or different from Thresh of the event 2. Other parameters may be deduced by analogy. Details are not described again.

Second, parameters determined by the first terminal device include one or more of the following: M1, M2, Mx, $M_i$, and P/$\overline{P}$.

For example, the first terminal device obtains the foregoing parameters (namely, at least one of M1, M2, Mx, $M_i$, and P/$\overline{P}$) through AI/ML model inference.

In a possible implementation, an AI/ML model may be generated by the first terminal device, or an AI/ML model is delivered (delivered) or transferred (transferred) by the network device side (for example, the first network device) to the first terminal device. This is not limited in embodiments of this application.

For example, in embodiments of this application, the AI/ML model may be a model constructed by using a machine learning technology or an artificial intelligence technology, for example, may be a model constructed based on a convolutional neural network, a long short-term memory network (long short-term memory, LSTM), a transformer (Transformer) network, linear regression, logistic regression, a decision tree, a support vector machine (support vector machine, SVM), a Bayesian network, a Q learning model, or another technology.

In embodiments of this application, output of the AI/ML model may be related to a probability that a cell included in the first cell set serves as the target cell. For example, in a possible implementation, the AI/ML model outputs a probability that each cell in the first cell set serves as the target cell, and may include one or more of M1, M2, Mx, and $M_i$. The output of the AI/ML model may also be related to whether the handover is required. For example, the AI/ML model outputs the probability P that the handover is required and/or the probability $\overline{P}$ that the handover is not required.

In embodiments of this application, a softmax function or another technology may be used at a last layer of the AI/ML model, to output a probability (for example, the probability that the first cell serves as the target cell).

In embodiments of this application, the output of the AI/ML model may be a probability, or may not be a probability, but may represent, or may represent through processing, a value of a relative possibility (for example, a relative possibility that the first cell serves as the target cell). This is not limited in embodiments of this application. This application does not exclude a possibility that another name or another expression manner is defined in a future protocol to represent a same or similar meaning. Any modification, equivalent replacement, improvement, or the like that satisfies characteristics of the configuration 1 in embodiments of this application, in other words, that is made within the spirit and principle of embodiments of this application shall fall within the protection scope of embodiments of this application.

In embodiments of this application, input of the AI/ML model may include but is not limited to:

a first item: a measurement quantity obtained by the first terminal device through measurement, for example, an SINR value obtained by the first terminal device by measuring an SINR, an RSRP value obtained by measuring an RSRP, an RSRQ value obtained by measuring RSRQ, an RSSI value obtained by measuring a received signal strength indication (received signal strength indication, RSSI), and an RSCP value obtained by measuring a received signal code power (received signal code power, RSCP);

a second item: channel state information (channel state information, CSI);

a third item: at least one of position information and track information of the first terminal device, where a plurality of pieces of consecutive position information may constitute the track information of the first terminal device;

a fourth item: motion information of the first terminal device, for example, a running speed and an acceleration of the first terminal device;

a fifth item: service information of the first terminal device, for example, one or more of a service type, service load, and service duration of the first terminal device; and

a sixth item: time information, where the time information may include time corresponding to a measurement quantity or other information that is obtained by the first terminal device through measurement. For example, the time information includes a time point 1 and a time point 2. A measurement quantity corresponding to the time point 1 is denoted as a measurement quantity 1. A measurement quantity corresponding to the time point 2 is denoted as a measurement quantity 2. In addition, the time information may be absolute time (for example, UTC time), or may be relative time (for example, a system frame number (system frame number, SFN)). This is not limited in embodiments of this application.

It is easy to understand that input information of the AI/ML model may include information at a moment, may include information corresponding to a plurality of consecutive moments, may include information corresponding to a plurality of frequencies (which may be replaced with frequency points or frequency bands), or may include information corresponding to a plurality of cells. The input information of the AI/ML model may be the foregoing original information, or may be information obtained by processing the original information. This is not limited in embodiments of this application.

Third, AI/ML models used to infer the foregoing parameter (for example, at least one of M1, M2, Mx, $M_i$, and P/$\overline{P}$) may be a same model, or may be different models.

Example 1: An AI/ML model 1 is used to infer M1, and an AI/ML model 2 is used to infer M2.

Example 2: An AI/ML model 1 is used to infer M1 and M2.

It should be understood that the foregoing example 1 and example 2 are used to describe a correspondence between an AI/ML model and a parameter, and should not be construed as a limitation on embodiments of this application.

In addition, the first terminal device may determine the foregoing parameter (for example, at least one of M1, M2, Mx, $M_i$, and P/$\overline{P}$) by using another method instead of using the AI/ML model inference manner. This is not limited in embodiments of this application.

Fourth, the event of the configuration 1 and a mobility-specific configuration event (for example, the event A1, the event A2, the event A3, the event A4, the event A5, the event A6, the event B1, or the event B2 in S201) in a current 5G communication system may be independently configured and performed, or may be jointly configured and performed. During the joint configuration, the events may be configured in serial or parallel. For example, two events are used as an example. For an event X and an event Y, only the event X or the event Y may be configured, or the event X and the event Y may be jointly configured. When the event X and the event Y are jointly configured, the event X and the event Y may be simultaneously performed/triggered, or the event Y may be performed after the event X is triggered.

In some embodiments, when the configuration information is used to configure the configuration 1, the configuration information is further used to configure at least one of the following:

a first item: trigger duration, for example, denoted as TTT, where the trigger duration indicates a period of time in which an event entry condition is continuously satisfied; and
a second item: trigger count, for example, denoted as NTT, where the trigger count indicates a number of times that an event entry condition is continuously satisfied.

The event entry condition includes the entry condition of the event of the configuration 1.

For example, when the configuration information includes TTT, for example, TTT is five slots.

For the first terminal device, the event 1 serves as an example. After the first terminal device determines, for the first time, that the entry condition of the event 1 is satisfied, the entry condition of the event 1 is still satisfied in five consecutive slots. In this case, the first terminal device determines to enter the event 1, to help improve event determining accuracy.

For example, when the configuration information includes NTT, for example, NTT is 5 times.

For the first terminal device, the event 1 serves as an example. After determining, for the first time, that the entry condition of the event 1 is satisfied, the first terminal device determines, for five consecutive times, that the entry condition of the event 1 is still satisfied. In this case, the first terminal device determines to enter the event 1, to help improve event determining accuracy.

In some embodiments, when the configuration information is used to configure the configuration 1, the configuration information includes an event sequence number or an event identifier. The event sequence number indicates an event configured by using the configuration information, and the event identifier identifies an event configured by using the configuration information.

For example, the event identifier serves as an example, and the event 1 to the event 11 are respectively identified by using letters, for example, A to K. When the configuration information is used for the event 1 of the configuration 1, the configuration information includes an event identifier of the event 1, for example, a letter A.

For another example, the event sequence number is used as an example, and the event 1 to the event 11 are identified by using sequence numbers, for example, 1 to 11. When the configuration information is used for the event 1 of the configuration 1, the configuration information includes a sequence number of the event 1, for example, a digit 1.

In other words, the configuration information is used to configure the event by using the event sequence number and/or the event identifier, to help reduce signaling overheads.

In some embodiments, when the configuration information is used to configure the configuration 1, as shown in FIG. 4, the first terminal device further performs the following operations.

(Optional) S304: The first terminal device starts inference based on the configuration 1.

For example, the first terminal device determines, based on an inference result, information such as whether handover needs to be performed or the probability that the second cell becomes the target cell, to obtain a more accurate handover occasion and/or a more accurate target cell.

(Optional) S305: The first terminal device stops the inference based on the configuration 1.

For example, when the entry condition of the event 1 is satisfied, the first terminal device considers that the handover is not required temporarily, and may temporarily stop the inference about whether the handover is required or the probability that the second cell becomes the target cell.

In this way, the first terminal device stops the inference in a timely manner based on the configuration 1, to reduce power consumption on a terminal side.

In some embodiments, as shown in FIG. 4, the first terminal device further performs the following operations.

(Optional) S306: The first terminal device sends second information to the first network device. Correspondingly, the first network device receives the second information from the first terminal device.

The second information includes at least one of the following:

> a first item: an identifier of at least one cell, where the identifier of the cell may be a physical cell identifier (physical cell identifier, PCI), and the at least one cell is one or more of cells that satisfy the configuration 1; and
> a second item: an event identifier that triggers the second information, where the event identifier is one or more of the events in the configuration 1.

In an example, the first terminal device first determines that the entry condition of the event 6 is satisfied, and then determines the cell indicated by the second information, where the cell indicated by the second information includes the second cell in the event 6. In this case, the second information includes an identifier of the second cell and an event identifier of the event 6.

Alternatively, the first terminal device determines that the entry condition of the event 8 is satisfied. The second information may include the event identifier that triggers the second information, namely, an event identifier of the event 8. Optionally, the second information may further include the cell identifier, for example, may include identifiers of the $k$ cells in the event 8, or may include a cell identifier of the target cell selected from the $k$ cells. This is not limited in embodiments of this application.

In another example, the first terminal device determines, based on the events (for example, the foregoing event 1 to the foregoing event 11) of the configuration 1 and the mobility-specific configuration events (for example, the event A1, the event A2, the event A3, the event A4, the event A5, the event A6, the event B1, or the event B2 in S201) in the current 5G communication system, the cell indicated by the second information.

For example, the second information further includes probability information, and the probability information includes a probability that the cell indicated by the second information serves as the target cell.

For example, when the second information indicates a cell 1, the second information includes a PCI of the cell 1 and a probability value. The probability value indicates a probability that the cell 1 serves as the target cell.

It should be understood that the second information may further include other measurement information, for example, a measurement quantity of the first terminal device. Specifically, the first terminal device starts inter-frequency/inter-radio access technology measurement to obtain a measurement quantity of the inter-frequency/inter-radio access technology measurement, and reports the measurement quantity to the first network device by using the second information.

It may be understood that the second information may be sent by the first terminal device to the first network device via one message, or may be sent by the first terminal device to the first network device via a plurality of messages.

(Optional) S307: The first network device determines the target cell based on the second information.

For example, the first network device determines, based on the second information, at least one of the following: whether to perform cell handover, the target cell after the cell handover, and a cell handover policy. The cell handover may be one of the following: intra-frequency handover, inter-frequency handover, inter-radio access technology handover, conditional handover, or dual active protocol stack handover. The cell handover policy includes handover or redirection.

(Optional) S308: The first network device notifies the second network device to perform handover preparation.

The second network device is a network device corresponding to the target cell. For details, refer to the descriptions of S205.

(Optional) S309: The first terminal device, the first network device, and the second network device perform handover.

For example, the first terminal device releases a connection to the first network device, and initiates a RACH procedure to the second network device. For details, refer to the descriptions of S206.

Next, the configuration 2 is described in detail.

In the configuration 2, the configuration information indicates the first terminal device to determine the first information based on the first submodel.

In a possible implementation, for example, the first terminal device and the network device side (for example, the first network device) may implement the configuration 2 based on an AI/ML model identity (identity, ID) and/or a functionality (functionality). When the configuration 2 is implemented based on the AI/ML model ID, the configuration information includes AI/ML model ID indication information, and the AI/ML model ID indication information indicates a specific AI/ML submodel to be used for inference, or the AI/ML model ID indication information indicates a specific AI/ML submodel to be started. When the configuration 2 is implemented based on the functionality, the configuration information includes functionality indication information, and the functionality indication information indicates operating in an AI/ML mode, or the functionality indication information indicates to enable an AI/ML mode for a functionality, for example, a mobility-related functionality, to configure the first terminal device to determine the first information based on the first submodel by binding the first submodel and the functionality.

For another example, the first terminal device and the first network device pre-agree that the first terminal device determines the first information based on the first submodel. In this case, when the first network device configures, by using the configuration information, the first terminal device to report the first information, the first terminal device determines the first information based on the first submodel.

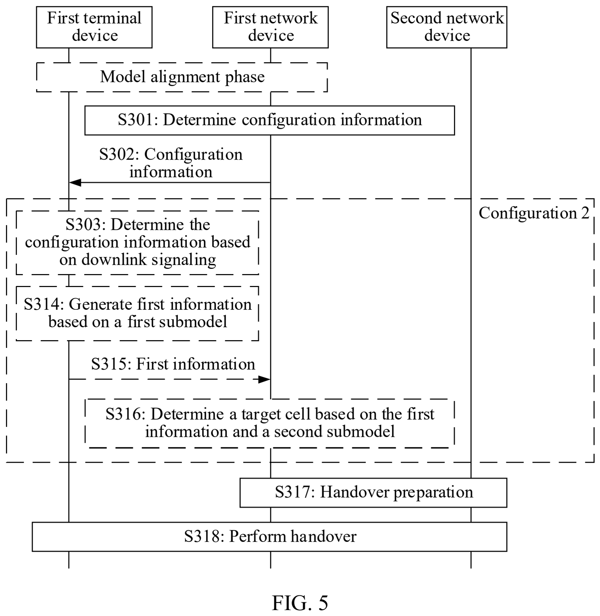

In some embodiments, as shown in FIG. 5, before S301, a model alignment phase is further included. Alternatively, after S301 and before the first terminal device performs S314, the foregoing model alignment phase is further included.

In the model alignment phase, the first terminal device and the first network device perform model alignment. The model alignment means that the first submodel of the first terminal device and a second submodel of the first network device may be interconnected. For example, the AI/ML model includes two parts, namely, the first submodel and the second submodel. The first terminal device performs inference using the first submodel, to obtain a first inference result (namely, the first information). The first network device inputs the first inference result into the second submodel, and performs inference using the second submodel, to obtain a second inference result.

In a possible implementation, the network side trains and configures a dual-ended model. The dual-ended model includes a terminal-side model and a network-side model. The terminal-side model is a submodel, namely, the first submodel, configured for the first terminal device. The network-side model is a submodel, namely, the second submodel, configured for the first network device.

Certainly, there may be a plurality of configuration manners of the submodel. This is not limited in embodiments of this application.

In some embodiments, after determining to determine the first information based on the first submodel, the first terminal device performs S314.

S314: The first terminal device generates the first information based on the first submodel.

For example, the first information is related to one or more of the following information:

a first item: a measurement quantity obtained by the first terminal device through measurement;
a second item: channel state information;
a third item: at least one of position information and track information of the first terminal device;
a fourth item: motion information of the first terminal device;
a fifth item: service information of the first terminal device; and
a sixth item: time information.

For details about the first item of information to the sixth item of information, refer to the descriptions of the configuration 1. Details are not described herein again.

The first item of information to the sixth item of information may be input information of the first submodel, and are used by the first submodel to perform inference, so as to output the first information.

The first item of information to the sixth item of information may include information at a moment, may include information corresponding to a plurality of consecutive moments, may include information corresponding to a plurality of frequencies (which may be replaced with frequency points or frequency bands), or may include information corresponding to a plurality of cells. The input information of the first submodel may be the foregoing original information, or may be information obtained by processing the original information. This is not limited in embodiments of this application.

For example, the first information may be information obtained by performing processing using the first submodel. The processing performed using the first submodel may be represented as including but not limited to: refining, compression, or the like, to reduce transmission load, and may further reduce a possibility of exposing internal information of the first terminal device.

S315: The first terminal device sends the first information to the first network device. Correspondingly, the first network device receives the first information from the first terminal device.

It may be understood that the first information may be sent by the first terminal device to the first network device via one message, or may be sent by the first terminal device to the first network device via a plurality of messages.

S316: The first network device determines the target cell based on the first information and the second submodel.

For example, the first network device inputs the first information into the second submodel, performs inference using the second submodel, to obtain a second inference result, and then determines the target cell based on the second inference result.

For example, the second inference result may be a probability, for example, a probability related to the configuration 1. In this case, the first network device determines the target cell based on the second inference result and the event of the configuration 1.

Alternatively, the second inference result may be other information. Correspondingly, the first network device determines the target cell based on the second inference result in another processing manner. This is not limited in embodiments of this application.

For another example, the first network device inputs the first information and reference information into the second submodel, performs inference using the second submodel, to obtain a second inference result, and then determines the target cell based on the second inference result.

The reference information includes information about at least one network device, for example, information on a first network device side, and/or information on a network device side corresponding to the second cell. The reference information is related to the cell, for example, includes a load status of each cell.

For example, the second inference result includes a probability value P1 that a cell 1 serves as the target cell, a probability value P2 that a cell 2 serves as the target cell, and a probability value P3 that a cell 3 serves as the target cell.

The reference information includes a load status of the cell 1, a load status of the cell 2, and a load status of the cell 3.

In this case, in a possible example, even if the probability value P3 that the cell 3 serves as the target cell is highest, if current load of the cell 3 is highest, the first network device also selects one cell from the cell 1 and the cell 2 as the target cell, to avoid impact on a cell handover success rate of the first terminal device due to excessive load of the cell 3.

(Optional) S317: The first network device notifies the second network device to perform handover preparation.

The second network device is a network device corresponding to the target cell. For details, refer to the descriptions of S205.

(Optional) S318: The first terminal device, the first network device, and the second network device perform handover.

For example, the first terminal device releases a connection to the first network device, and initiates a RACH procedure to the second network device. For details, refer to the descriptions of S206.

Next, an event of the configuration 3 is described in detail.

In the event of the configuration 3, the first moment is a future moment, and the first time period is a future time period.

In the event of the configuration 3, a prediction result of a measurement object may also be referred to as a measurement quantity without causing confusion.

In the event of the configuration 3, a measurement quantity at the first moment is obtained by the first terminal device through prediction. For example, the first terminal device predicts the measurement quantity at the first moment based on a measurement quantity in a second time period. In this case, the first moment is later than any moment in the second time period.

Similarly, a measurement quantity in the first time period is obtained by the first terminal device through prediction. For example, the first terminal device predicts the measurement quantity in the first time period based on the measurement quantity in the second time period. In this case, the first time period is later than the second time period.

The measurement quantity in the second time period is obtained by the first terminal device through measurement.

It should be understood that, in the configuration 3, the measurement quantity at the first moment (in the first time period) may be an original value of the measurement quantity at the first moment (in the first time period), or may include a value obtained by processing the measurement quantity at the first moment (in the first time period), for example, an average value, a maximum value, or a minimum value of the measurement quantity at the first moment (in the first time period); and may further include measurement quantities corresponding to a plurality of frequencies (which may alternatively be replaced with frequency points or frequency bands), and may further include measurement quantities corresponding to a plurality of cells.

For example, when predicting the measurement quantity at the first moment (or in the first time period), in addition to using the measurement quantity in the second time period, the first terminal device may further use one or more of the following information: channel state information, at least one of position information and track information of the first terminal device, motion information of the first terminal device, time information, and the like. For details, refer to descriptions of S314. Details are not described herein again. The information used to predict the measurement quantity at the first moment (or in the first time period) may belong to the second time period, or may exceed the second time period (including at least the second time period). This is not limited in embodiments of this application.

The event of the configuration 3 may include at least one of the following:

Event 12: indicates that a measurement quantity of the serving cell at the first moment (or in the first time period) is greater than a preset threshold. It is assumed that the threshold is Thresh. When an inequality 12-1 is satisfied, the event 12 is entered; and when an inequality 12-2 is satisfied, the event 12 is left, where

the inequality 12-1 (an entry condition): Ms-Hys>Thresh; and
the inequality 12-2 (an exit condition): Ms+Hys<Thresh, where
Ms is the measurement quantity of the current serving cell at the first moment (or in the first time period), Hys is a hysteresis parameter of the event, where each parameter of Thresh and Hys may be configured by a network side, may be pre-agreed on by two communication parties, or may be determined by the first terminal device. This is not limited in embodiments of this application.

Event 13: indicates that a measurement quantity of the serving cell at the first moment (or in the first time period) is less than a preset threshold. It is assumed that the threshold is Thresh. When an inequality 13-1 is satisfied, the event 13 is entered; and when an inequality 13-2 is satisfied, the event 13 is left, where

the inequality 13-1 (an entry condition): Ms+Hys<Thresh; and
the inequality 13-2 (an exit condition): Ms-Hys>Thresh, where
Ms is the measurement quantity of the current serving cell at the first moment (or in the first time period), Hys is a hysteresis parameter of the event, where each parameter of Thresh and Hys may be configured by a network side, may be pre-agreed on by two communication parties, or may be determined by the first terminal device. This is not limited in embodiments of this application.

Event 14: indicates that a measurement quantity of an intra-frequency neighboring cell at the first moment (or in the first time period) is greater than a measurement quantity of a special cell at the first moment (or in the first time period). When an inequality 14-1 is satisfied, the event 14 is entered; and when an inequality 14-2 is satisfied, the event 14 is left, where

the inequality 14-1 (an entry condition): Mn+Ofn+Ocn-Hys>Mp+Ofp+Ocp+Off; and
the inequality 14-2 (an exit condition): Mn+Ofn+Ocn+Hys<Mp+Ofp+Ocp+Off, where
Mn is the measurement quantity of the intra-frequency neighboring cell at the first moment (or in the first time period), Ofn is a frequency (which may alternatively be replaced with frequency point or frequency band) offset of the intra-frequency neighboring cell, Ocn is a cell individual offset of the intra-frequency neighboring cell, Mp is the measurement quantity of the special cell at the first moment (or in the first time period), Ofp is a frequency (which may alternatively be replaced with frequency point or frequency band) offset of the special cell, Ocp is a cell individual offset of the special cell, Hys is a hysteresis parameter of the event, and Off is an offset parameter of the event. Mn and Mp are obtained by the first terminal device through prediction, and each of the other several parameters may be configured by a network side, may be pre-agreed on by two communication parties, or may be determined by the first terminal device. This is not limited in embodiments of this application.

It should be understood that, in the event 14, parameters such as Ofn, Ocn, Hys, Ofp, Ocp, and Off are all optional parameters, in other words, only some of the parameters may be used in an expression of the entry condition and/or an expression of the exit condition. This is not limited in embodiments of this application.

Event 15: indicates that a measurement quantity of an inter-frequency neighboring cell at the first moment (or in the first time period) is greater than a preset threshold. It is assumed that the threshold is Thresh. When an inequality 15-1 is satisfied, the event 15 is entered; and when an inequality 15-2 is satisfied, the event 15 is left, where

the inequality 15-1 (an entry condition): Mn+Ofn+Ocn-Hys>Thresh; and
the inequality 15-2 (an exit condition): Mn+Ofn+Ocn+Hys<Thresh, where
Mn is the measurement quantity of the inter-frequency neighboring cell at the first moment (or in the first time period), Ofn is a frequency (which may alternatively be replaced with frequency point or frequency band) offset of the inter-frequency neighboring cell, Ocn is a cell individual offset of the inter-frequency neighboring cell, and Hys is a hysteresis parameter of the event, where each parameter of Ofn, Ocn, Hys, and Thresh may be configured by a network side, may be pre-agreed on by two communication parties, or may be determined by the first terminal device. This is not limited in embodiments of this application.

It should be understood that, in the event 15, parameters such as Ofn, Ocn, and Hys are all optional parameters, in other words, only some of the parameters may be used in an expression of the entry condition and/or an expression of the exit condition. This is not limited in embodiments of this application.

Event 16: indicates that a measurement quantity of a special cell at the first moment (or in the first time period) is less than a first threshold and a measurement quantity of a neighboring cell at the first moment (or in the first time period) is greater than a second threshold. It is assumed that the first threshold is Thresh161 and the second threshold is Thresh162. When an inequality 16-1 and an inequality 16-2 are satisfied, the event 16 is entered, where a sequence of the two entry conditions is not limited; and when at least one of an inequality 16-3 or an inequality 16-4 is satisfied, the event 16 is left, where

the inequality 16-1 (an entry condition 1): $Mp+Hys161<Thresh161$;
the inequality 16-2 (an entry condition 2): $Mn+Ofn+Ocn-Hys162>Thresh162$;
the inequality 16-3 (an exit condition 1): $Mp-Hys161>Thresh161$; and
the inequality 16-4 (an exit condition 2): $Mn+Ofn+Ocn+Hys162<Thresh162$, where
Mp is the measurement quantity of the special cell at the first moment (or in the first time period), Mn is the measurement quantity of the neighboring cell at the first moment (or in the first time period), Ofn is a frequency (which may alternatively be replaced with frequency point or frequency band) offset of the neighboring cell, Ocn is a cell individual offset of the neighboring cell, and Hys161 and Hys162 are hysteresis parameters of the event, where each parameter of Ofn, Ocn, Hys161, Hys162, Thresh161, and Thresh162 may be configured by a network side, or may be pre-agreed on by two communication parties, or may be determined by the first terminal device. This is not limited in embodiments of this application. Hys161 and Hys162 may be the same or different, and Thresh161 and Thresh162 may be the same or different.

It should be understood that, in the event 16, parameters such as Ofn, Ocn, Hys161, and Hys162 are all optional parameters, in other words, only some of the parameters may be used in an expression of the entry condition and/or an expression of the exit condition. This is not limited in embodiments of this application.

Event 17: indicates that a measurement quantity of a neighboring cell at the first moment (or in the first time period) is greater than a measurement quantity of the serving cell at the first moment (or in the first time period). When an inequality 17-1 is satisfied, the event 17 is entered; and when an inequality 17-2 is satisfied, the event 17 is left, where

the inequality 17-1 (an entry condition): $Mn+Ocn-Hys>Ms+Ocs+Off$; and
the inequality 17-2 (an exit condition): $Mn+Ocn+Hys<Ms+Ocs+Off$, where
Ms is the measurement quantity of the serving cell at the first moment (or in the first time period), Mn is the measurement quantity of the neighboring cell at the first moment (or in the first time period), Ocn is a cell individual offset of the neighboring cell, Ocs is a cell individual offset of the serving cell, Hys is a hysteresis parameter of the event, and Off is an offset parameter of the event. Mn and Ms are obtained by the first terminal device through prediction, and each of the other several parameters is configured by a network side, may be pre-agreed on by two communication parties, or may be determined by the first terminal device. This is not limited in embodiments of this application.

It should be understood that, in the event 17, parameters such as Ocn, Ocs, Hys, and Off are all optional parameters, in other words, only some of the parameters may be used in an expression of the entry condition and/or an expression of the exit condition. This is not limited in embodiments of this application.

Event 18: indicates that a measurement quantity of an inter-radio access technology neighboring cell at the first moment (or in the first time period) is greater than a preset threshold. It is assumed that the threshold is Thresh. When an inequality 18-1 is satisfied, the event 18 is entered; and when an inequality 18-2 is satisfied, the event 18 is left, where

the inequality 18-1 (an entry condition): $Mn+Ofn-Hys>Thresh$; and
the inequality 18-2 (an exit condition): $Mn+Ofn+Hys<Thresh$, where
Mn is the measurement quantity of the inter-radio access technology neighboring cell at the first moment (or in the first time period), Ofn is a frequency (which may alternatively be replaced with frequency point or frequency band) offset of the inter-radio access technology neighboring cell, and Hys is a hysteresis parameter of the event, where each parameter of Ofn, Hys, and Thresh may be configured by a network side, may be pre-agreed on by two communication parties, or may be determined by the first terminal device. This is not limited in embodiments of this application.

It should be understood that, in the event 18, parameters such as Ofn and Hys are all optional parameters, in other words, only some of the parameters may be used in an expression of the entry condition and/or an expression of the exit condition. This is not limited in embodiments of this application.

Event 19: indicates that a measurement quantity of a special cell at the first moment (or in the first time period) is less than a first threshold and a measurement quantity of an inter-radio access technology neighboring cell at the first moment (or in the first time period) is greater than a second threshold. It is assumed that the first threshold is Thresh191 and the second threshold is Thresh192. When an inequality 19-1 and an inequality 19-2 are satisfied, the event 19 is entered; and when at least one of an inequality 19-3 or an inequality 19-4 is satisfied, the event 19 is left, where

the inequality 19-1 (an entry condition 1): $Mp+Hys191<Thresh191$;
the inequality 19-2 (an entry condition 2): $Mn+Ofn+Ocn-Hys192>Thresh192$;

the inequality 19-3 (an exit condition 1): $Mp-Hys191>Thresh191$; and

the inequality 19-4 (an exit condition 2): $Mn+Ofn+Ocn+Hys192<Thresh192$, where

Mp is the measurement quantity of the special cell at the first moment (or in the first time period), Mn is the measurement quantity of the inter-radio access technology neighboring cell at the first moment (or in the first time period), Ofn is a frequency (which may alternatively be replaced with frequency point or frequency band) offset of the inter-radio access technology neighboring cell, and Hys191 and Hys192 are hysteresis parameters of the event, where each parameter of Ofn, Ocn, Hys191, Hys192, Thresh191, and Thresh192 may be configured by a network side, may be pre-agreed on by two communication parties, or may be determined by the first terminal device. This is not limited in embodiments of this application. Hys191 and Hys192 may be the same or different, and Thresh191 and Thresh192 may be the same or different. This is not limited in embodiments of this application.

It should be understood that, in the event 19, parameters such as Ofn, Ocn, Hys191, and Hys192 are all optional parameters, in other words, only some of the parameters may be used in an expression of the entry condition and/or an expression of the exit condition. This is not limited in embodiments of this application.

It should be understood that, the events (for example, the foregoing event 12 to the foregoing event 19) of the configuration 3 may maximize use of an existing standard protocol framework.

It should be understood that, in the configuration 3, the measurement quantity at the first moment (in the first time period) may be Ms, Mp, Mn, or the like in the event 12 to the event 19. The measurement quantity at the first moment (in the first time period) may be obtained by the first terminal device through inference based on an AI/ML model, or may be determined in another manner. This is not limited in embodiments of this application.

It should be understood that a measurement object corresponding to the measurement quantity related to the configuration 3, for example, a measurement object corresponding to the measurement quantity at the first moment (or in the first time period), or a measurement object corresponding to the measurement quantity in the second time period, may be one or more of an RSRP, RSRQ, or an SINR.

In some embodiments, when the configuration information is used to configure the configuration 3, the configuration information is further used to configure at least one of the following:

a first item: trigger duration, for example, denoted as TTT, where the trigger duration indicates a period of time in which an event entry condition is continuously satisfied; and

a second item: trigger count, for example, denoted as NTT, where the trigger count indicates a number of times that an event entry condition is continuously satisfied.

The event entry condition includes the entry condition of the event of the configuration 3.

For example, TTT and NTT help improve event determining accuracy. For details, refer to the descriptions of the configuration 1. Details are not described herein again.

In some embodiments, when the configuration information is used to configure the configuration 3, the configuration information includes an event sequence number or an event identifier. The event sequence number indicates an event configured by using the configuration information, and the event identifier identifies an event configured by using the configuration information.

In other words, the configuration information is used to configure the event by using the event sequence number and/or the event identifier, to help reduce signaling overheads. Refer to the descriptions of the configuration 1. Details are not described herein again.

In some embodiments, the configuration information is further used to configure the second time period. The measurement quantity in the second time period is used to predict a measurement quantity of the configuration 3 (for example, when the configuration 3 is used to configure an event related to the measurement quantity at the first moment, the measurement quantity of the configuration 3 includes the measurement quantity at the first moment; for another example, when the configuration 3 is used to configure an event related to the measurement quantity in the first time period, the measurement quantity of the configuration 3 includes the measurement quantity in the first time period), and the measurement quantity in the second time period is obtained by the first terminal device through measurement.

For example, configuration manners of the second time period are described as follows:

Manner 1: The configuration information further indicates a start moment and an end moment of the second time period.

Manner 2: The configuration information further indicates a start moment and duration of the second time period.

Manner 3: The configuration information further indicates a start moment of the second time period, a quantity of measurement times of the measurement quantity in the second time period, and a measurement gap of the measurement quantity in the second time period.

Manner 4: The configuration information further indicates an end moment of the second time period, a quantity of measurement times of the measurement quantity in the second time period, and a measurement gap of the measurement quantity in the second time period.

It should be understood that the manner 1 to the manner 4 are merely examples for describing the configuration manners of the second time period. Certainly, there may be another type of configuration manner. This is not limited in embodiments of this application.

In other words, the first network device can further configure the second time period, so that the first terminal device determines the measurement quantity at the first moment (or in the first time period) based on the measurement quantity in the second time period.

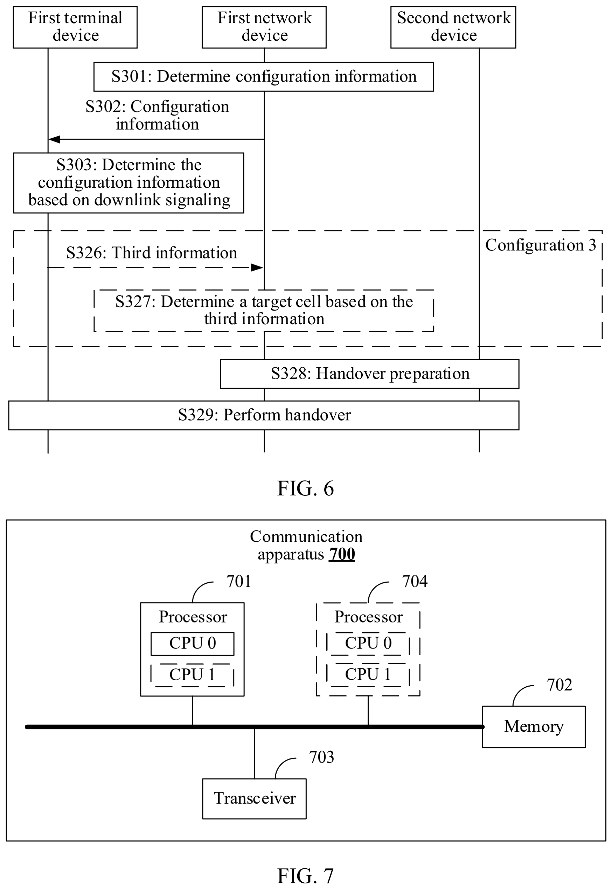

In some embodiments, when the configuration information is used to configure the configuration 3, as shown in FIG. 6, the first terminal device further performs the following operations.

(Optional) S326: The first terminal device sends third information to the first network device. Correspondingly, the first network device receives the third information from the first terminal device.

The third information includes at least one of the following:

a first item: an identifier of at least one cell, where the identifier of the cell may be a PCI, and the at least one cell is one or more of cells that satisfy the configuration 3; and
a second item: a measurement identifier that triggers the third information, where
the measurement identifier identifies one or more of the following:

a first item: at least one measurement object, where a measurement result of each of the at least one measurement object is one measurement quantity of the configuration 3; for example, the measurement identifier includes a measurement object identifier, and the measurement object identifier identifies the measurement object; in embodiments of this application, the measurement object may include an RSRP, RSRQ, an SINR, and the like; and the measurement object identifier may include an identifier of the RSRP, an identifier of the RSRQ, an identifier of the SINR, and the like; and
a second item: at least one event, where each of the at least one event is one event configured by using the configuration 3.

In some embodiments, the third information further includes fourth information. The fourth information includes a measurement quantity of a cell, indicated by the third information, at the first moment (or in the first time period).

For example, when the third information indicates a cell 1, the third information further includes an RSRP value. The RSRP value indicates a measurement quantity of the cell 1 at the first moment (or in the first time period).

It should be understood that the third information may further include other measurement information, for example, a measurement quantity obtained by the first terminal device through measurement.

It should be further understood that the third information may be sent by the first terminal device to the first network device via one message, or may be sent by the first terminal device to the first network device via a plurality of messages.

(Optional) S327: The first network device determines the target cell based on the third information.

For example, the first network device determines, based on the third information, at least one of the following: whether to perform cell handover, the target cell after the cell handover, and a cell handover policy. For details, refer to the descriptions of S307. Details are not described herein again.

(Optional) S328: The first network device notifies the second network device to perform handover preparation.

The second network device is a network device corresponding to the target cell. For details, refer to the descriptions of S205.

(Optional) S329: The first terminal device, the first network device, and the second network device perform handover.

For example, the first terminal device releases a connection to the first network device, and initiates a RACH procedure to the second network device. For details, refer to the descriptions of S206.

It should be noted that, in all embodiments of this application, all greater than signs (>) may be replaced with greater than or equal to signs (≥), and all less than signs (<) may be replaced with less than or equal to signs (≤). This is not limited in this application.

It should be noted that in all embodiments of this application, when the configuration information is used to configure the foregoing event and/or the parameter (such as Of1, Oc1, Of2, Oc2, Ofx, Ocx, Hys, Thresh, k, N, TTT, or NTT) of the event, a same message may be used for configuration, or different messages may be used for configuration. This is not limited in embodiments of this application.

It may be understood that, the parameters in all embodiments of this application, including M1, M2, Mx, $M_i$, and P/$\overline{P}$, and parameters such as Of2, Oc2, Of1, Oc1, Hys, Off, and Thresh (not listed one by one), may have a same parameter name used in different embodiments, different configurations, and different events, but this does not indicate that the parameters have a same meaning or different meanings. Their meanings in different embodiments, different configurations, and different events are subject to descriptions in the context.

The foregoing mainly describes the solutions provided in embodiments of this application from a perspective of interaction between the network elements. Correspondingly, an embodiment of this application further provides a communication apparatus. The communication apparatus may be the network element in the foregoing method embodiment, an apparatus including the foregoing network element, or a part that can be used in the network element. It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

For example, FIG. 7 is a diagram of a structure of a communication apparatus according to an embodiment of this application.

For example, the communication apparatus may be a first terminal device, or may be a chip (system) or another part or component disposed in the first terminal device.

For another example, the communication apparatus may be a first network device, or may be a chip (system) or another part or component disposed in the first network device.

As shown in FIG. 7, the communication apparatus 700 may include a processor 701. Optionally, the communication apparatus 700 may further include a memory 702 and/or a transceiver 703. The processor 701 is coupled to the memory 702 and the transceiver 703, for example, may be connected to the memory 702 and the transceiver 703 through a communication bus.

The following specifically describes each part of the communication apparatus 700 with reference to FIG. 7.

The processor 701 is a control center of the communication apparatus 700, and may be one processor, or may be a collective term of a plurality of processing elements. For example, the processor 701 is one or more central processing units (central processing units, CPUs), may be an application specific integrated circuit (application specific integrated circuit, ASIC) or one or more integrated circuits configured to implement embodiments of this application, for example, one or more digital signal processors (digital signal processors, DSPs) or one or more field programmable gate arrays (field programmable gate arrays, FPGAs).

Optionally, the processor 701 may execute various functions of the communication apparatus 700 by running or executing a software program stored in the memory 702 and invoking data stored in the memory 702.

During specific implementation, in an embodiment, the processor 701 may include one or more CPUs, for example, a CPU 0 and a CPU 1 shown in FIG. 7.

During specific implementation, in an embodiment, the communication apparatus 700 may alternatively include a plurality of processors, for example, the processor 701 and a processor 704 shown in FIG. 7. Each of the processors may be a single-core processor (single-CPU), or may be a multi-core processor (multi-CPU). The processor herein may be one or more devices, circuits, and/or processing cores configured to process data (for example, computer program instructions).

The memory 702 is configured to store the software program for executing the solutions in this application, and the processor 701 controls execution. For a specific implementation, refer to the foregoing method embodiments. Details are not described herein again.

Optionally, the memory 702 may be a read-only memory (read-only memory, ROM) or another type of static storage device capable of storing static information and instructions, or a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium capable of carrying or storing expected program code in a form of instructions or a data structure and capable of being accessed by a computer, but is not limited thereto. The memory 702 may be integrated with the processor 701, or may exist independently, and is coupled to the processor 701 through an interface circuit (not shown in FIG. 7) of the communication apparatus 700. This is not specifically limited in embodiments of this application.

The transceiver 703 is configured to communicate with another communication apparatus.

For example, the communication apparatus 700 is a first terminal device, and the transceiver 703 may be configured to communicate with a first network device or a second network device.

For another example, the communication apparatus 700 is a first network device, and the transceiver 703 may be configured to communicate with a first terminal device or a second network device.

Optionally, the transceiver 703 may include a receiver and a transmitter (not separately shown in FIG. 7). The receiver is configured to implement a receiving function, and the transmitter is configured to implement a sending function.

Optionally, the transceiver 703 may be integrated with the processor 701, or may exist independently, and is coupled to the processor 701 through an interface circuit (not shown in FIG. 7) of the communication apparatus 700. This is not specifically limited in embodiments of this application.

It may be understood that the structure of the communication apparatus 700 shown in FIG. 7 does not constitute a limitation on the communication apparatus. An actual communication apparatus may include more or fewer parts than those shown in the figure, or some parts may be combined, or a different part arrangement may be used.

In addition, for technical effects of the communication apparatus 700, refer to the technical effects of the method in the foregoing method embodiment. Details are not described herein again.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memories, RAMs) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

Optionally, an embodiment of this application further provides a computer program product carrying computer instructions. When the computer instructions are run on a computer, the computer is caused to perform the method described in the foregoing embodiment.

Optionally, an embodiment of this application further provides a computer-readable storage medium. The computer-readable storage medium stores computer instructions. When the computer instructions are run on a computer, the computer is caused to perform the method described in the foregoing embodiment.

Optionally, an embodiment of this application further provides a chip, including a processing circuit and a transceiver circuit. The processing circuit and the transceiver circuit are configured to implement the method described in the foregoing embodiment. The processing circuit is configured to perform a processing action in a corresponding method, and the transceiver circuit is configured to perform a receiving/sending action in a corresponding method.

All or some of the foregoing embodiments may be implemented using software, hardware (for example, circuit), firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded and executed on a computer, all or some of the processes or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof means any combination of these items, including a singular item (piece) or any combination of plural items (pieces). For example, at least one of a, b, or c may indicate: a, b, c, a-b, a-c, b-c, or a-b-c, where a, b, and c may be singular or plural.

It should be understood that sequence numbers of the foregoing procedures do not mean execution sequences in various embodiments of this application. The execution sequences of the procedures should be determined based on functions and internal logic of the processes, and should not be construed as any limitation on the implementation procedures of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for a detailed working procedure of the foregoing system, apparatus, and unit, refer to a corresponding procedure in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on an actual requirement to achieve the objective of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, or a communication device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A handover configuration method, applied to a first terminal device or a chip of the first terminal device, wherein the method comprises:

   receiving, in a first cell, downlink signaling from a first network device; and
   determining configuration information based on the downlink signaling, wherein the configuration information indicates at least one of the following:

   a configuration 1: an event related to a probability, wherein the probability comprises a probability of cell handover or a probability that the second cell serves as a target cell, the second cell belongs to a first cell set, and the first cell set comprises at least one of the following: the first cell, at least one intra-radio access technology neighboring cell of the first cell, or at least one inter-radio access technology neighboring cell of the first cell;
   a configuration 2: determining first information based on a first submodel, wherein the first submodel is a part of the following model: an artificial intelligence AI model or a machine learning ML model, and the first information is used for cell handover; and

a configuration 3: an event related to a measurement quantity at a first moment or a measurement quantity in a first time period, wherein the first moment comprises a future moment, the first time period comprises a future time period, and the measurement quantity at the first moment or the measurement quantity in the first time period is obtained by the first terminal device through prediction.

2. The method according to claim 1, wherein when the probability comprises the probability that the second cell serves as the target cell, the configuration 1 is used to configure at least one of the following:

an event 1: a probability that the first cell serves as the target cell is greater than a threshold, wherein
an entry condition: M1>Thresh; and
an exit condition: M1<Thresh, wherein
M1 indicates the probability that the first cell serves as the target cell; and
Thresh indicates the threshold of the event 1, and the first cell is the same as the second cell;
an event 2: a probability that the first cell serves as the target cell is less than a threshold, wherein
an entry condition: M1<Thresh; and
an exit condition: M1>Thresh, wherein
M1 indicates the probability that the first cell serves as the target cell; and
Thresh indicates the threshold of the event 2, and the first cell is the same as the second cell;
an event 3: the probability that the second cell serves as the target cell is greater than a probability that the first cell serves as the target cell, wherein the first cell is different from the second cell, wherein
an entry condition: M2>M1; and
an exit condition: M2<M1, wherein
M2 indicates the probability that the second cell serves as the target cell; and
M1 indicates the probability that the first cell serves as the target cell;
an event 4: the probability that the second cell serves as the target cell is greater than a threshold, wherein
an entry condition: M2>Thresh; and
an exit condition: M2<Thresh, wherein
M2 indicates the probability that the second cell serves as the target cell; and
Thresh indicates the threshold of the event 4;

and
an event 5: a probability that the first cell serves as the target cell is less than a first threshold, and the probability that the second cell serves as the target cell is greater than a second threshold, wherein the first cell is different from the second cell, wherein
an entry condition: M1<Thresh51 and M2>Thresh52; and
an exit condition: M1>Thresh51 and/or M2<Thresh52, wherein
M1 indicates the probability that the first cell serves as the target cell;
M2 indicates the probability that the second cell serves as the target cell; and
Thresh51 indicates the first threshold of the event 5, and Thresh52 indicates the second threshold of the event 5.

3. The method according to claim 1, wherein when the probability comprises the probability that the second cell serves as the target cell, the configuration 1 is used to configure at least one of the following:

an event 1: a probability that the first cell serves as the target cell is greater than a threshold, wherein
an entry condition: M1-Hys>Thresh; and
an exit condition: M1+Hys<Thresh, wherein
M1 indicates the probability that the first cell serves as the target cell;
Hys indicates a hysteresis parameter of the event 1; and
Thresh indicates the threshold of the event 1, and the first cell is the same as the second cell;
an event 2: a probability that the first cell serves as the target cell is less than a threshold, wherein
an entry condition: M1+Hys<Thresh; and
an exit condition: M1-Hys>Thresh, wherein
M1 indicates the probability that the first cell serves as the target cell;
Hys indicates a hysteresis parameter of the event 2; and
Thresh indicates the threshold of the event 2, and the first cell is the same as the second cell;
an event 3: the probability that the second cell serves as the target cell is greater than a probability that the first cell serves as the target cell, wherein the first cell is different from the second cell, wherein
the event 3 comprises at least one of an event 31 and an event 32, wherein
conditions of the event 31 comprise:

an entry condition: M2+Of2+Oc2-Hys>M1+Of1+Oc1+Off; and
an exit condition: M2+Of2+Oc2+Hys<M1+Of1+Oc1+Off, wherein
M2 indicates the probability that the second cell serves as the target cell;
M1 indicates the probability that the first cell serves as the target cell;
Of2 indicates a first offset of the probability that the second cell serves as the target cell;
Oc2 indicates a second offset of the probability that the second cell serves as the target cell;
Of1 indicates a first offset of the probability that the first cell serves as the target cell;
Oc1 indicates a second offset of the probability that the first cell serves as the target cell;
Hys indicates a hysteresis parameter of the event 31; and
Off indicates an offset value of the event 31; and
conditions of the event 32 comprise:

> an entry condition: M2+Oc2-Hys>M1+Oc1+Off; and
> an exit condition: M2+Oc2+Hys<M1+Oc1+Off, wherein
> M2 indicates the probability that the second cell serves as the target cell;
> M1 indicates the probability that the first cell serves as the target cell;
> Oc2 indicates an offset of the probability that the second cell serves as the target cell;
> Oc1 indicates an offset of the probability that the first cell serves as the target cell;
> Hys indicates a hysteresis parameter of the event 32; and
> Off indicates an offset value of the event 32;
> an event 4: the probability that the second cell serves as the target cell is greater than a threshold, wherein
> an entry condition: M2+Of2+Oc2-Hys>Thresh; and
> an exit condition: M2+Of2+Oc2+Hys<Thresh, wherein
> M2 indicates the probability that the second cell serves as the target cell;
> Of2 indicates a first offset of the probability that the second cell serves as the target cell;
> Oc2 indicates a second offset of the probability that the second cell serves as the target cell;
> Hys indicates a hysteresis parameter of the event 4; and
> Thresh indicates the threshold of the event 4; and

an event 5: a probability that the first cell serves as the target cell is less than a first threshold, and the probability that the second cell serves as the target cell is greater than a second threshold, wherein the first cell is different from the second cell, wherein
an entry condition: M1+Hys51<Thresh51 and M2+Of2+Oc2-Hys52>Thresh52; and
an exit condition: M1-Hys51>Thresh51 and/or M2+Of2+Oc2+Hys52<Thresh52, wherein
M1 indicates the probability that the first cell serves as the target cell;
M2 indicates the probability that the second cell serves as the target cell;
Of2 indicates a first offset of the probability that the second cell serves as the target cell;
Oc2 indicates a second offset of the probability that the second cell serves as the target cell;
Hys51 indicates a first hysteresis parameter of the event 5;
Hys52 indicates a second hysteresis parameter of the event 5;
Thresh51 indicates the first threshold of the event 5; and
Thresh52 indicates the second threshold of the event 5.

4. The method according to claim 1, wherein when the probability comprises the probability that the second cell serves as the target cell, and the second cell is a cell that is in the first cell set and that has a highest probability of being the target cell, the configuration 1 is used to configure at least one of the following:

> an event 6: the probability that the second cell serves as the target cell is greater than an offset value of a probability that a third cell in the first cell set serves as the target cell, wherein
> an entry condition: M2>Mx+Off; and
> an exit condition: M2<Mx+Off, wherein
> M2 indicates the probability that the second cell serves as the target cell;
> Mx indicates the probability that the third cell serves as the target cell, and the third cell is any cell in the first cell set other than the second cell; and
> Off indicates the offset value of the event 6; and
> an event 7: the probability that the second cell serves as the target cell is less than an offset value of a probability that a third cell in the first cell set serves as the target cell, wherein
> an entry condition: M2<Mx+Off; and
> an exit condition: M2>Mx+Off, wherein

M2 indicates the probability that the second cell serves as the target cell;

Mx indicates the probability that the third cell serves as the target cell, and the third cell is any cell in the first cell set other than the second cell; and

Off indicates the offset value of the event 7.

5. The method according to claim 1, wherein when the probability comprises the probability that the second cell serves as the target cell, and the second cell is a cell that is in the first cell set and that has a highest probability of being the target cell, the configuration 1 is used to configure at least one of the following:

an event 6: the probability that the second cell serves as the target cell is greater than an offset value of a probability that a third cell in the first cell set serves as the target cell, wherein

an entry condition: M2+Of2+Oc2-Hys>Mx+Ofx+Ocx+Off; and

an exit condition: M2+Of2+Oc2+Hys<Mx+Ofx+Ocx+Off, wherein

M2 indicates the probability that the second cell serves as the target cell;

Mx indicates the probability that the third cell serves as the target cell, and the third cell is any cell in the first cell set other than the second cell;

Of2 indicates a first offset of the probability that the second cell serves as the target cell;

Oc2 indicates a second offset of the probability that the second cell serves as the target cell;

Ofx indicates a first offset of the probability that the third cell serves as the target cell;

Ocx indicates a second offset of the probability that the third cell serves as the target cell;

Hys indicates a hysteresis parameter of the event 6; and

Off indicates the offset value of the event 6; and

an event 7: the probability that the second cell serves as the target cell is less than an offset value of a probability that a third cell in the first cell set serves as the target cell, wherein

an entry condition: M2+Of2+Oc2+Hys<Mx+Ofx+Ocx+Off, and

an exit condition: M2+Of2+Oc2-Hys>Mx+Ofx+Ocx+Off, wherein

M2 indicates the probability that the second cell serves as the target cell;

Mx indicates the probability that the third cell serves as the target cell, and the third cell is any cell in the first cell set other than the second cell;

Of2 indicates a first offset of the probability that the second cell serves as the target cell;

Oc2 indicates a second offset of the probability that the second cell serves as the target cell;

Ofx indicates a first offset of the probability that the third cell serves as the target cell;

Ocx indicates a second offset of the probability that the third cell serves as the target cell;

Hys indicates a hysteresis parameter of the event 7; and

Off indicates the offset value of the event 7.

6. The method according to claim 1, wherein when the probability comprises the probability that the second cell serves as the target cell, the configuration 1 is used to configure at least one of the following:

an event 8: a sum of probabilities of $k$ cells with higher probabilities of being the target cell is greater than a threshold, wherein

an entry condition: $\sum_{i=1}^{k} M_i > \text{Thresh}$; and

an exit condition: $\sum_{i=1}^{k} M_i < \text{Thresh}$, wherein

$M_i$ indicates a probability that an $i^{th}$ cell in the $k$ cells serves as the target cell, the $k$ cells are first $k$ cells in the first cell set with higher probabilities of being the target cell, and the first cell set comprises N cells, wherein $k \leq N$, and $k$ and $N$ are positive integers; and

Thresh indicates the threshold of the event 8; and

an event 9: a sum of probabilities of $k$ cells with higher probabilities of being the target cell is less than a threshold, wherein

an entry condition: $\sum_{i=1}^{k} M_i < \text{Thresh}$; and

an exit condition: $\sum_{i=1}^{k} M_i > \text{Thresh}$, wherein

$M_i$ indicates a probability that an $i^{th}$ cell in the $k$ cells serves as the target cell, the $k$ cells are first $k$ cells in the first cell set with higher probabilities of being the target cell, and the first cell set comprises N cells, wherein $k \leq N$, and $k$ and $N$ are positive integers; and

Thresh indicates the threshold of the event 9.

7. The method according to claim 1, wherein when the probability comprises the probability that the second cell serves as the target cell, the configuration 1 is used to configure at least one of the following:

an event 8: a sum of probabilities of $k$ cells with higher probabilities of being the target cell is greater than a threshold, wherein

an entry condition: $\sum_{i=1}^{k} M_i - Hys > \text{Thresh}$; and

an exit condition: $\sum_{i=1}^{k} M_i + Hys < \text{Thresh}$, wherein

$M_i$ indicates a probability that an $i^{th}$ cell in the $k$ cells serves as the target cell, the $k$ cells are first $k$ cells in the first cell set with higher probabilities of being the target cell, and the first cell set comprises N cells, wherein $k \le N$, and $k$ and $N$ are positive integers; and

Hys indicates a hysteresis parameter of the event 8; and

Thresh indicates the threshold of the event 8; and

an event 9: a sum of probabilities of $k$ cells with higher probabilities of being the target cell is less than a threshold, wherein

an entry condition:

$$\sum_{i=1}^{k} M_i + Hys < \text{Thresh}$$ ; and

an exit condition:

$$\sum_{i=1}^{k} M_i - Hys > \text{Thresh}$$ , wherein

$M_i$ indicates a probability that an $i^{th}$ cell in the $k$ cells serves as the target cell, the $k$ cells are first $k$ cells in the first cell set with higher probabilities of being the target cell, and the first cell set comprises N cells, wherein $k \le N$, and $k$ and $N$ are positive integers;

Hys indicates a hysteresis parameter of the event 9; and

Thresh indicates the threshold of the event 9.

8. The method according to claim 1, wherein when the probability comprises the probability of cell handover, the configuration 1 is used to configure at least one of the following:

an event 10: the probability of cell handover is greater than a threshold, wherein
an entry condition: P>Thresh; and
an exit condition: P<Thresh, wherein
P indicates the probability of cell handover, and
Thresh indicates the threshold corresponding to the event 10; and
an event 11: the probability of cell handover is less than a threshold, wherein
an entry condition: P<Thresh; and
an exit condition: P>Thresh, wherein
P indicates the probability of cell handover, and
Thresh indicates the threshold corresponding to the event 11.

9. The method according to claim 1, wherein when the probability comprises the probability of cell handover, the configuration 1 is used to configure at least one of the following:

an event 10: the probability of cell handover is greater than a threshold, wherein
an entry condition: P - Hys>Thresh; and
an exit condition: P + Hys<Thresh, wherein
P indicates the probability of cell handover, and
Thresh indicates the threshold corresponding to the event 10; and
Hys indicates a hysteresis parameter of the event 10; and
an event 11: the probability of cell handover is less than a threshold, wherein
an entry condition: P + Hys<Thresh; and
an exit condition: P - Hys>Thresh, wherein
P indicates the probability of cell handover, and
Thresh indicates the threshold corresponding to the event 11; and
Hys indicates a hysteresis parameter of the event 11.

10. The method according to any one of claims 1 to 9, wherein after determining the configuration information, the method further comprises: sending second information to the first network device, wherein the second information comprises an identifier of at least one cell, and/or an event identifier that triggers the second information, wherein the at least one cell is one or more of cells that satisfy the configuration 1, and the event identifier is one or more of events in the configuration 1.

11. The method according to claim 10, wherein the second information further comprises probability information, and the probability information comprises a probability that the cell indicated by the second information serves as the target cell.

12. The method according to claim 1, wherein when the configuration information is used to configure the configuration 2, the method further comprises: sending the first information to the first network device, wherein the first information is used for cell handover decision, and/or the first information is used to determine the target cell accessed by the first terminal device after the first terminal device performs the cell handover.

13. The method according to claim 1 or 12, wherein the first information is related to at least one of the following:

a measurement quantity obtained by the first terminal device through measurement;
channel state information CSI determined by the first terminal device; or
one or more of position information, motion information, and service information of the first terminal device.

14. The method according to claim 1, wherein when the configuration information is used to configure the configuration 3, the configuration information is further used to configure a second time period, wherein
a measurement quantity in the second time period is used to predict a measurement quantity of the configuration 3, and the measurement quantity in the second time period is obtained by the first terminal device through measurement.

15. The method according to claim 1 or 14, wherein after determining the configuration information, the method further comprises: sending third information to the first network device, wherein

the third information comprises an identifier of at least one cell, and/or a measurement identifier that triggers the third information;
the at least one cell is one or more of cells that satisfy the configuration 3; and
the measurement identifier identifies at least one measurement object and/or at least one event, a measurement result of each of the at least one measurement object is one measurement quantity of the configuration 3, and each of the at least one event is one event configured by using the configuration 3.

16. The method according to claim 15, wherein when the third information comprises the identifier of the at least one cell, the third information further comprises a measurement quantity, of the cell indicated by the third information, at the first moment or in the first time period.

17. The method according to any one of claims 1 and 13 to 16, wherein a measurement object corresponding to the measurement quantity comprises at least one of the following: a reference signal received power RSRP, reference signal received quality RSRQ, or a signal to interference plus noise ratio SINR.

18. The method according to any one of claims 1 to 17, wherein
when the configuration information is used to configure the configuration 1 and/or the configuration 3, the configuration information is further used to configure at least one of the following:

trigger duration, wherein the trigger duration indicates a period of time in which an event entry condition is continuously satisfied; or
trigger count, wherein the trigger count indicates a number of times that an event entry condition is continuously satisfied, wherein
the event entry condition comprises an entry condition of an event configured by using the configuration information.

19. The method according to any one of claims 1 to 18, wherein when the configuration information is used to configure the configuration 1 and/or the configuration 3, the configuration information comprises an event sequence number or an event identifier, wherein
the event sequence number indicates an event configured by using the configuration information, and the event identifier identifies an event configured by using the configuration information.

20. A handover configuration method, applied to a first network device or a chip of the first network device, wherein the method comprises:

determining configuration information; and
sending, in a first cell, downlink signaling to a first terminal device, wherein the downlink signaling comprises the configuration information, and the configuration information indicates at least one of the following:

a configuration 1: an event related to a probability, wherein the probability comprises a probability of cell handover or a probability that a second cell serves as a target cell, the second cell belongs to a first cell set, and the first cell set comprises at least one of the following: the first cell, at least one intra-radio access technology neighboring cell of the first cell, or at least one inter-radio access technology neighboring cell of the first cell;
a configuration 2: determining first information based on a first submodel, wherein the first submodel is a part of the following model: an artificial intelligence AI model or a machine learning ML model, and the first information is used for cell handover; and
a configuration 3: an event related to a measurement quantity at a first moment or a measurement quantity in a first time period, wherein the first moment comprises a future moment, the first time period comprises a future time period, and the measurement quantity at the first moment or the measurement quantity in the first time period is obtained by the first terminal device through prediction.

21. The method according to claim 20, wherein after determining the configuration information, the method further comprises: receiving second information from the first terminal device, wherein
the second information comprises an identifier of at least one cell, and/or an event identifier that triggers the second information, wherein the at least one cell is one or more of cells that satisfy the configuration 1, and the event identifier is one or more of events in the configuration 1.

22. The method according to claim 20, wherein when the configuration information is used to configure the configuration 2, the method further comprises: receiving the first information from the first terminal device, wherein

the first information is used to determine the cell handover, or the first information and reference information are used to determine the cell handover; and/or the first information is used to determine the target cell, or the first information and the reference information are used to determine the target cell; and
the reference information comprises information provided by at least one network device, and the at least one network device comprises the first network device and/or a network device corresponding to the second cell.

23. The method according to claim 20, wherein after determining the configuration information, the method further comprises: receiving third information from the first terminal device, wherein

the third information comprises an identifier of at least one cell, and/or a measurement identifier that triggers the third information;
the at least one cell is one or more of cells that satisfy the configuration 3; and
the measurement identifier identifies at least one measurement object and/or at least one event, a measurement result of each of the at least one measurement object is one measurement quantity of the configuration 3, and each of the at least one event is one event configured by using the configuration 3.

24. A terminal device, comprising a processor and a memory, wherein the processor is coupled to the memory, and the memory stores program instructions; and when the program instructions stored in the memory are executed by the processor, the terminal device is caused to perform the method according to any one of claims 1 to 19.

25. A network device, comprising a processor and a memory, wherein the processor is coupled to the memory, and the memory stores program instructions; and when the program instructions stored in the memory are executed by the processor, the network device is caused to perform the method according to any one of claims 20 to 23.

26. A chip, comprising a processor and a memory coupled to the processor, wherein the memory stores a computer program, and the chip is located in a terminal device; and when the processor executes the computer program, the terminal device is caused to perform the method according to any one of claims 1 to 19.

27. A chip, comprising a processor and a memory coupled to the processor, wherein the memory stores a computer program, and the chip is located in a network device; and when the processor executes the computer program, the network device is caused to perform the method according to any one of claims 20 to 23.

28. A computer-readable storage medium, storing a computer program or instructions, wherein when the computer program or the instructions are executed on a terminal device, the terminal device is caused to perform the method according to any one of claims 1 to 19.

29. A computer-readable storage medium, storing a computer program or instructions, wherein when the computer program or the instructions are executed on a network device, the network device is caused to perform the method according to any one of claims 20 to 23.

30. A computer program product, wherein the computer program product comprises computer instructions; and when a part or all of the computer instructions are run on a computer, the method according to any one of claims 1 to 19 is performed, or the method according to any one of claims 20 to 23 is performed.

FIG. 1

FIG. 2

300

| First terminal device | First network device |
|---|---|

S301: Determine configuration information

S302: Configuration information

S303: Determine the configuration information based on downlink signaling

FIG. 3

| First terminal device | First network device | Second network device |
|---|---|---|

S301: Determine configuration information

S302: Configuration information

S303: Determine the configuration information based on downlink signaling

Configuration 1

S304: Start inference based on the configuration 1

S305: Stop the inference based on the configuration 1

S306: Second information

S307: Determine a target cell based on the second information

S308: Handover preparation

S309: Perform handover

FIG. 4

First terminal device | First network device | Second network device

Model alignment phase

S301: Determine configuration information

S302: Configuration information

S303: Determine the configuration information based on downlink signaling

S314: Generate first information based on a first submodel

S315: First information

S316: Determine a target cell based on the first information and a second submodel

Configuration 2

S317: Handover preparation

S318: Perform handover

FIG. 5

| First terminal device | First network device | Second network device |
|---|---|---|

S301: Determine configuration information

S302: Configuration information

S303: Determine the configuration information based on downlink signaling

S326: Third information

Configuration 3

S327: Determine a target cell based on the third information

S328: Handover preparation

S329: Perform handover

FIG. 6

Communication apparatus **700**

701

Processor

CPU 0

CPU 1

704

Processor

CPU 0

CPU 1

702

Memory

703

Transceiver

FIG. 7

## INTERNATIONAL SEARCH REPORT

| International application No. |
| --- |
| **PCT/CN2024/091063** |

| | |
| --- | --- |
| **A.** | **CLASSIFICATION OF SUBJECT MATTER** |
| | H04W36/00(2009.01)i |

According to International Patent Classification (IPC) or to both national classification and IPC

| | |
| --- | --- |
| **B.** | **FIELDS SEARCHED** |

Minimum documentation searched (classification system followed by classification symbols)

IPC:H04L,H04W

Documentation searched other than minimum documentation to the extent that such documents are included in the fields searched

Electronic data base consulted during the international search (name of data base and, where practicable, search terms used)

CNTXT, ENTXT, ENTXTC, VCN, VEN, 3GPP, IEEE, CNKI: 概率, 机器学习, 切换, 人工智能, 事件?, 未来时段, 未来时刻, 预测, AI, chance, hand over, machine, ML, predict, probability, hand off+, learn+

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | CN 115836541 A (BEIJING XIAOMI MOBILE SOFTWARE CO., LTD.) 21 March 2023 (2023-03-21) claims 1-18, and description, paragraphs [0068]-[0086], [0125]-[0129], [0248]-[0256] and [0436]-[0457] | 1-30 |
| X | CN 109495935 A (RESEARCH INSTITUTE OF CHINA MOBILE COMMUNICATIONS CORP.; CHINA MOBILE COMMUNICATIONS CORP.) 19 March 2019 (2019-03-19) claims 1-8 | 1, 20, 24-30 |
| X | CN 116017608 A (VIVO COMMUNICATION TECHNOLOGY CO., LTD.) 25 April 2023 (2023-04-25) claims 1 and 15 | 1, 20, 24-30 |
| X | US 2022286927 A1 (SAMSUNG ELECTRONICS CO., LTD.) 08 September 2022 (2022-09-08) claims 1 and 11 | 1, 20, 24-30 |
| A | CN 114071484 A (HUAWEI TECHNOLOGIES CO., LTD.) 18 February 2022 (2022-02-18) entire document | 1-30 |

| | |
| --- | --- |
| ✓ Further documents are listed in the continuation of Box C. | ✓ See patent family annex. |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **18 June 2024** | **20 June 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/091063** |

### C. DOCUMENTS CONSIDERED TO BE RELEVANT

| Category* | Citation of document, with indication, where appropriate, of the relevant passages | Relevant to claim No. |
| --- | --- | --- |
| A | CN 115190550 A (HUAWEI TECHNOLOGIES CO., LTD.) 14 October 2022 (2022-10-14) entire document | 1-30 |
| A | WO 2022206411 A1 (HUAWEI TECHNOLOGIES CO., LTD.) 06 October 2022 (2022-10-06) entire document | 1-30 |
| A | WO 2022261834 A1 (GUANGDONG OPPO MOBILE TELECOMMUNICATIONS CORP., LTD.) 22 December 2022 (2022-12-22) entire document | 1-30 |

Form PCT/ISA/210 (second sheet) (July 2022)

**INTERNATIONAL SEARCH REPORT**
Information on patent family members

International application No.

**PCT/CN2024/091063**

| Patent document cited in search report | | | Publication date (day/month/year) | Patent family member(s) | | | Publication date (day/month/year) |
|---|---|---|---|---|---|---|---|
| CN | 115836541 | A | 21 March 2023 | None | | | |
| CN | 109495935 | A | 19 March 2019 | None | | | |
| CN | 116017608 | A | 25 April 2023 | None | | | |
| US | 2022286927 | A1 | 08 September 2022 | WO | 2022191493 | A1 | 15 September 2022 |
| | | | | EP | 4289178 | A1 | 13 December 2023 |
| CN | 114071484 | A | 18 February 2022 | None | | | |
| CN | 115190550 | A | 14 October 2022 | None | | | |
| WO | 2022206411 | A1 | 06 October 2022 | US | 2023422124 | A1 | 28 December 2023 |
| | | | | EP | 4287705 | A1 | 06 December 2023 |
| WO | 2022261834 | A1 | 22 December 2022 | US | 2024114408 | A1 | 04 April 2024 |

Form PCT/ISA/210 (patent family annex) (July 2022)

**REFERENCES CITED IN THE DESCRIPTION**

**Patent documents cited in the description**

- CN 202310492219

- CN 202310647088